# FASCICULE DE BREVET EUROPEEN

(11) **EP 3 490 951 B1**
(45) Date de publication et mention de la délivrance du brevet: **13.05.2020**
(21) Numéro de dépôt: 17754756.9
(22) Date de dépôt: 26.07.2017
(51) Int. Cl.: C03C 17/36, G02B 5/08, G02B 7/00, B64G 1/22, C09K 9/00

(54) **DISPOSITIF THERMOCHROME TOUT-SOLIDE, ET PROCEDE DE PREPARATION DE CE DISPOSITIF**
THERMOCHROME FESTKÖRPERVORRICHTUNG UND VERFAHREN ZUR HERSTELLUNG DER BESAGTEN VORRICHTUNG
SOLID-STATE THERMOCHROMIC DEVICE, AND METHOD FOR PRODUCING SAID DEVICE

(30) Priorité: 28.07.2016 FR 1657316
(43) Date de publication de la demande: 05.06.2019
(73) Titulaire: Commissariat à l'Energie Atomique et aux Energies Alternatives, 75015 Paris (FR); Centre National d'Etudes Spatiales, 75001 Paris (FR)
(72) Inventeur: MARCEL, Corinne, 37200 Tours (FR); SABARY, Frédéric, 37520 La Riche (FR); VERDALET GUARDIOLA, Xavier, 31270 Frouzins (FR); REMAURY, Stéphanie, 31460 Auriac/Vendinelle (FR)
(74) Mandataire: Brevalex
(86) Numéro de dépôt international: PCT/FR2017/052092
(87) Numéro de publication internationale: WO 2018/020160

(56) Documents cités:
- WO-A1-02/082172
- US-A- 3 834 793
- TAZAWA M ET AL: "NEW MATERIAL DESIGN WITH V1-XWXO2 FILM FOR SKY RADIATOR TO OBTAIN TEMPERATURE STABILITY", SOLAR ENERGY, PERGAMON PRESS. OXFORD, GB, vol. 64, no. 1/03, 1 septembre 1998 (1998-09-01), pages 3-07, XP000667634, ISSN: 0038-092X, DOI: 10.1016/S0038-092X(98)00057-7
- KOO HYUN ET AL: "The Effect of CeO2Antireflection Layer on the Optical Properties of Thermochromic VO2Film for Smart Window System", JOURNAL OF MATERIALS ENGINEERING AND PERFORMANCE, ASM INTERNATIONAL, MATERIALS PARK, OH, US, vol. 23, no. 2, 15 novembre 2013 (2013-11-15), pages 402-407, XP035372372, ISSN: 1059-9495, DOI: 10.1007/S11665-013-0740-7 [extrait le 2013-11-15]
- KOO HYUN ET AL: "Effect of Oxide Buffer Layer on the Thermochromic Properties of VO2Thin Films", JOURNAL OF MATERIALS ENGINEERING AND PERFORMANCE, ASM INTERNATIONAL, MATERIALS PARK, OH, US, vol. 22, no. 12, 1 octobre 2013 (2013-10-01), pages 3967-3973, XP035372058, ISSN: 1059-9495, DOI: 10.1007/S11665-013-0696-7 [extrait le 2013-10-01]

## Description

### DOMAINE TECHNIQUE

L'invention concerne un dispositif thermochrome tout-solide.

Plus précisément, l'invention a trait à un dispositif thermochrome tout solide actif dans l'infrarouge dit tout solide qui comprend un empilement inorganique de couches minces avec une couche en un matériau thermochrome à base d'oxyde de vanadium IV, VO₂.

Plus exactement encore, le dispositif selon l'invention est un dispositif thermochrome tout solide à émissivité modulable dans l'infrarouge (IR) et à faible absorptivité solaire.

Par dispositif tout-solide, on entend un dispositif constitué uniquement de matériaux inorganiques, solides à la température ambiante.

L'invention concerne, en outre, un procédé de préparation dudit dispositif.

Le domaine technique de l'invention peut, de manière générale, être défini comme celui des dispositifs dits « tout solide » actifs dans l'infrarouge, à fonctionnement dans l'infrarouge, ou à fonctionnement infrarouge.

De tels dispositifs peuvent notamment être utilisés dans des conditions spatiales pour la protection thermique des satellites.

### ÉTAT DE LA TECHNIQUE ANTÉRIEURE

Il existe actuellement deux classes de dispositifs, systèmes, actifs dans l'infrarouge, à fonctionnement dans l'infrarouge, à savoir d'une part les dispositifs systèmes, électrochromes, et d'autre part les dispositifs, systèmes, thermochromes.

Si l'on s'intéresse tout d'abord aux dispositifs, systèmes, électrochromes à fonctionnement dans l'infrarouge, il existe actuellement deux grandes familles, de dispositifs, systèmes, électrochromes actifs dans l'infrarouge, à savoir les dispositifs organiques qui peuvent être des dispositifs dits « tout organique » exclusivement à base de polymères organiques, et les dispositifs inorganiques appelés dispositifs « tout solide » constitués d'empilements de couches inorganiques ou minérales.

En dehors de ces grandes familles il existe aussi des dispositifs dits hybrides qui associent des matériaux organiques et des matériaux inorganiques.

Parmi les dispositifs électrochromes organiques, il existe des systèmes souples à base de polymères conducteurs absorbants variables sur une membrane d'or poreuse et réflectrice IR. De tels dispositifs présentent un risque de délamination des interfaces, particulièrement en face avant, à moins d'employer un procédé d'élaboration et d'activation complexe.

Parmi les dispositifs électrochromes organiques, on trouve également des systèmes robustes, moins fragiles que les dispositifs souples décrits précédemment, c'est-à-dire sans risque de délamination, tels que des « réseaux interpénétrés de polymères à émissivité modulable ».

Cependant, les dispositifs électrochromes organiques restent difficilement adaptables aux conditions spatiales pour la protection thermique des satellites, car les polymères sont sensibles aux températures extrêmes et aux UV, et les électrolytes liquides présentent un risque de fuite et/ou de déformation irréversible lors d'une mise sous vide secondaire.

Les dispositifs électrochromes inorganiques sont plus résistants que leurs homologues organiques, mais leur intégration nécessite tout de même la mise en œuvre de contacts électriques et d'un système de gestion de pilotage de tension, car leur émissivité varie avec leur potentiel redox par activation électrochimique.

Des exemples des tels dispositifs sont donnés dans les documents US-B1-7,265,890 et US-A1-2016/0018714.

Si l'on s'intéresse maintenant aux dispositifs, systèmes, thermochromes à fonctionnement infrarouge, ces dispositifs présentent l'avantage de ne pas avoir besoin d'être activés par voie électrochimique, et donc de ne pas nécessiter d'électrodes. C'est pour cela que les « tuiles » (ou « patches ») thermochromes sont beaucoup plus intéressantes que les électrochromes en termes d'intégration, sur une paroi de satellite ou sur des vitrages pour le bâtiment ou l'automobile.

Parmi les dispositifs, systèmes, thermochromes à fonctionnement infrarouge, on distingue d'une part les dispositifs, systèmes, ayant pour but d'obtenir une bonne efficacité énergétique ou plus simplement les systèmes pour l'efficacité énergétique, et d'autre part les dispositifs, systèmes, à émissivité variable pour des applications spatiales.

Les dispositifs, systèmes, pour l'efficacité énergétique sont destinés à des applications dans le domaine du vitrage, et doivent allier confort visuel et thermique.

Le matériau actif de ces dispositifs est généralement constitué d'oxyde de vanadium de couleur bronze devenant réflecteur infrarouge à haute température (à savoir à une température supérieure à la température, dite température de commutation Tc, qui est de 68°C dans le cas de VO₂).

Par dopage de VO₂ notamment avec du tungstène, on peut abaisser cette température de commutation Tc autour de 25°C comme cela est décrit dans le document de S-Y Li, G.A. Niklasson, C.G. Granqvist « Thermochromic fenestration with VO2-based materials : Three challenges and how they can be met », Thin Solid Films 520 (2012) 3823-3828.

Des exemples de ces dispositifs, systèmes thermochromes pour l'efficacité énergétique sont donnés dans les documents FR-A1-2809388, FR-A1-2856802, US-A1-2015/0203398, US-A1-2012/0064265 et US-A1-2015/0362763. D'autres revêtements thermochromes sont décrits dans les documents US3834793A1 et WO02/082172A1.

Dans les dispositifs, systèmes à émissivité variable pour des applications spatiales, on retrouve le même matériau actif, à savoir le VO₂ dopé. Ces applications spatiales requièrent, par rapport aux applications dans le vitrage, une plage de fonctionnement décalée vers de plus basses températures, à savoir une plage de fonctionnement entre -30°C et +100°C, par exemple entre -20°C et +68°C. Cette plage de fonctionnement varie selon le type de satellite.

Ces dispositifs exigent donc une très bonne qualité de dopage qui peut être atteinte par la technique de pulvérisation cathodique magnétron. On pourra à cet égard se reporter au document US-B2-7,761,053.

Le document de K. Wang, Y. Cao, Y. Zhang, L. Yan, Y. Li, « Fabrication of VO2-based multilayer structure with variable emittance », Applied Surface Science 344 (2015) 230-235], donne un exemple d'un dispositif, système à émissivité variable pour des applications spatiales, dans lequel une température de commutation de 5°C a été atteinte avec une couche de 50 nm de VO₂ dopé avec 3% de W, déposée sur une couche de 900 nm de HfO₂ sur fond argenté. On obtient ainsi un contraste optique infrarouge Δε, de 0,37.

En effet, afin de conférer au système une forte émissivité à chaud, le matériau thermochrome, déposé en couche très fine (généralement d'une épaisseur de 10 à 80 nm), doit être isolé de la paroi réflectrice par une couche diélectrique transparente au rayonnement Infrarouge IR, d'une forte épaisseur (autour de 1 µm). On pourra à cet égard se référer au document US-A1-2014/0139904.

De plus, ces dispositifs nécessitent une couche de protection solaire en face avant du dispositif, n'entravant pas le fonctionnement du matériau actif. Cette couche doit donc réfléchir le spectre solaire sur la gamme de longueurs d'onde 0,28 à 2,5 µm, et rester transparente au rayonnement Infrarouge IR, d'une longueur d'onde de 2,5 à 25 µm.

Des exemples de dispositifs, systèmes thermochromes à émissivité variable pour des applications spatiales sont donnés dans divers documents.

Dans le document US-B2-7,691,435, les propriétés de réflexion solaire du matériau actif, qui est du VO₂, sous la forme d'une couche d'une épaisseur de 10 à 96 nm, sont renforcées par l'introduction de couches de silicium alternées d'une épaisseur de 11 à 250 nm sur fond aluminisé, la couche réflectrice principale étant composée d'un miroir de Bragg multicentré à base de MgF₂/ZnS.

Le document de E. Haddad et al. « Tuneable emittance thin film coatings for thermal control", in: society of automotive engineers, Inc. Proceedings (2009), 2009-01, 2575-2587 décrit, quant à lui, un empilement à base de VO₂/SiO₂ capable d'abaisser α (absorptivité solaire) de 0,57 à 0,32.

Si l'on s'intéresse maintenant aux procédés pour préparer les dispositifs, systèmes, thermochromes tout solide à fonctionnement infrarouge, ces procédés utilisent des technologies différentes pour préparer chacune des couches de l'empilement inorganique tout solide du dispositif.

Ainsi, le document de A. Hendaoui, N. Emond, M. Chaker et E. Haddad « Highly tunable-emittance radiator based on semiconductor-metal transition of VO2 thin films », Applied Physics Letters 102, 061107 (2013), décrit la préparation d'un dispositif thermochrome dans lequel la couche diélectrique de SiO₂ est déposée par PECVD, le fond réflecteur est déposé par pulvérisation cathodique, et la couche de VO₂ est déposée par ablation laser. On doit donc utiliser trois machines différentes pour préparer le dispositif.

Le document de K. Wang, Y. Cao, Y. Zhang, L. Yan, Y. Li, « Fabrication of VO2-based multilayer structure with variable emittance », Applied Surface Science 344 (2015) 230-235], décrit la préparation d'un dispositif thermochrome où la couche diélectrique de HfO₂ est déposée par évaporation, alors que le fond réflecteur d'argent et la couche thermochrome de VO₂ dopée au tungstène sont élaborés par pulvérisation cathodique.

On doit donc utiliser deux machines différentes pour préparer le dispositif.

L'inconvénient essentiel des dispositifs thermochromes tout solide de l'art antérieur décrits plus haut, réside dans le fait que les couches diélectriques SiO₂ et HfO₂ présentent des bandes phonons entre 9 et 16 µm qui génèrent de fortes absorptions susceptibles de diminuer les performances des dispositifs.

Il existe donc, au regard de ce qui précède, un besoin pour un dispositif thermochrome, actif dans l'infrarouge, notamment à émissivité modulable dans l'infrarouge (IR), qui ne présente pas cet inconvénient.

Il existe encore, au regard de ce qui précède, un besoin pour un dispositif thermochrome, actif dans l'infrarouge, robuste, possédant une résistance mécanique élevée, résistant aux températures élevées, par exemple supérieures ou égales à 100°C, résistant aux rayonnements ultraviolets, pouvant être placé dans un environnement où règne le vide, par exemple dans l'espace.

Il existe, également, un besoin pour un dispositif qui puisse être fabriqué par un procédé simple, comportant un nombre limité d'étapes, et d'une durée réduite.

Le but de la présente invention est de fournir un dispositif thermochrome, actif dans l'infrarouge, qui réponde entre autres aux besoins énumérés plus haut.

Le but de la présente invention est finalement de fournir un tel dispositif qui ne présente pas les inconvénients, limitations, défauts et désavantages des dispositifs de l'art antérieur, et qui résolve les problèmes des dispositifs de l'art antérieur.

### EXPOSÉ DE L'INVENTION

Ce but, et d'autres encore, sont atteints, conformément à la présente invention, par un dispositif thermochrome tout-solide comprenant un empilement, ledit empilement comprenant, de préférence étant constitué par, successivement, depuis une face arrière jusqu'à une face avant exposée au rayonnement solaire :
a) un substrat solide en un matériau inorganique résistant jusqu'à une température de 550°C;
b) une couche réflectrice dans l'Infrarouge en un matériau conducteur électronique;
c) des couches d'interface isolantes électroniques ;
d) une couche diélectrique inorganique isolante électronique et transparente au rayonnement infrarouge, en oxyde de cérium CeO₂, d'une épaisseur de 400 à 900 nm, de préférence de 700 à 900 nm;
e) des couches d'interface isolantes électroniques;
f) une couche d'un matériau thermochrome, actif dans l'infrarouge, qui est un oxyde de vanadium VO₂ dopé de type n, et cristallisé dans une phase monoclinique ou rutile, d'une épaisseur de 30 à 50 nm, de préférence de 30 à 40 nm;
g) un revêtement de protection solaire, réflecteur solaire, transparent au rayonnement infrarouge.

Généralement, le substrat solide est en un matériau inorganique résistant jusqu'à une température de 550°C, notamment jusqu'à une température de 540°C, par exemple jusqu'à une température de 500°C, sous une atmosphère d'Argon et d'oxygène contenant au moins 96% en volume d'Argon.

Par couche b) réflectrice dans l'Infrarouge, on entend que cette couche est toujours réflectrice dans le domaine de l'infrarouge (IR) moyen, à savoir pour des longueurs d'onde de 2,5 à 25 µm, et qu'elle est aussi éventuellement, de préférence, réflectrice dans le proche IR de 0,78 à 2,5 µm, car cela contribue à réduire l'absorptivité solaire : c'est notamment le cas d'une couche d'argent d'une épaisseur de 100 nm, mais pas des couches d'oxydes métalliques car elles ne sont pas assez conductrices.

Par couche diélectrique isolante électronique et transparente au rayonnement infrarouge d), on entend que cette couche est transparente au rayonnement infrarouge moyen de 2,5 à 25 µm.

Par revêtement de protection solaire g) transparent au rayonnement infrarouge, on entend que ce revêtement est transparent au rayonnement infrarouge moyen de 2,5 à 25 µm, avec un pic d'absorption à 9 µm.

Par revêtement de protection solaire g), réflecteur solaire, on entend que ce revêtement est réflecteur du rayonnement solaire sur la totalité du domaine du rayonnement solaire, à savoir de 0,28 µm à 2,5 µm.

En outre, dans la présente, les termes « totalité de l'infrarouge » englobent le proche IR de 0,78 à 2,5 µm, l'IR moyen de 2,5 à 25 µm, et l'IR lointain de 25 à 100 µm.

Avantageusement, le substrat solide est en un matériau choisi parmi le silicium, les verres borosilicates, et l'aluminium.

Avantageusement, le substrat solide se présente sous la forme d'une couche, de préférence d'une couche d'une épaisseur de 0,3 à 1 mm, par exemple d'une épaisseur de 0,5 mm.

La couche réflectrice dans l'Infrarouge en un matériau conducteur électronique b), peut-être aussi appelée fond réflecteur.

De préférence, le matériau conducteur électronique de la couche b), est choisi parmi les métaux tels que les métaux nobles comme l'or, l'argent ou le platine; l'aluminium et le chrome ; les alliages métalliques ; et les oxydes métalliques conducteurs électroniques transparents dans le domaine du visible, tels que l'oxyde d'indium dopé à l'étain ou ITO, l'oxyde d'étain dopé au fluor ou FTO, l'oxyde d'étain dopé à l'antimoine ou ATO, ou l'oxyde de zinc dopé à l'aluminium AZO ; de préférence encore la couche réflectrice est en argent.

La couche réflectrice possède entre 60 et 100% de réflectivité dans l'Infrarouge, de préférence 100%.

Plus exactement, la couche réflectrice a 100% de réflectivité lorsqu'elle est en un matériau choisi parmi les métaux et les alliages métalliques. C'est notamment le cas lorsque le dispositif selon l'invention est destiné à équiper les parois des satellites qui n'ont pas besoin d'être transparentes.

La couche réflectrice a de 60 % à 80 % de réflectivité lorsqu'elle est en un matériau choisi parmi les oxydes métalliques conducteurs électroniques transparents dans le domaine du visible. C'est notamment le cas lorsque le dispositif selon l'invention est destiné à être utilisé dans des vitrages par exemple pour le bâtiment ou l'automobile, car ces oxydes sont moins conducteurs que les métaux et donc moins réflecteurs IR.

Avantageusement, la couche réflectrice b) a une épaisseur de 80 à 150 nm, de préférence de 100 nm.

Les couches d'interface c) permettent d'assurer l'adhérence de la couche diélectrique d) sur la couche réflectrice b).

Avantageusement, les couches d'interface c) sont au nombre de 2.

Avantageusement, les couches d'interface c) ont une épaisseur totale de 10 à 30 nm.

Le choix des matériaux de ces couches d'interface est guidé par le coût des matériaux cibles qui doit être le plus faible possible.

Avantageusement, les couches d'interface c) comprennent, depuis la couche réflectrice, une première couche constituée de Si₃N₄ ou de AlN, puis une seconde couche constituée de SiO₂ ou de Al₂O₃.

En effet, le coût des matériaux cibles Si et Al est particulièrement faible.

La première couche, nitrurée, permet la passivation de la couche réflectrice lorsque celle-ci est en un métal ou en un alliage métallique tel que l'argent, qui s'oxyde facilement. Cette première couche, nitrurée peut donc être considérée comme indispensable dans le cas de l'argent.

Cette première couche, nitrurée est aussi utile pour l'adhérence du CeO₂ sur les autres métaux ou oxydes métalliques.

La deuxième couche, oxydée, assure, quant à elle, la cohésion de l'oxyde de cérium.

Avantageusement, la première couche constituée de Si₃N₄ ou de AlN, a une épaisseur de 5 à 15 nm, par exemple de 10 nm, et la seconde couche constituée de SiO₂ ou de Al₂O₃, a une épaisseur de 5 à 15 nm, par exemple de 10 nm.

Les couches d'interface e) permettent d'empêcher toute réaction chimique entre la couche thermochrome f) et la couche diélectrique isolante électronique et transparente au rayonnement infrarouge d).

Avantageusement, les couches d'interface e) sont au nombre de 2.

Avantageusement, les couches d'interface e) ont une épaisseur totale de 105 à 155 nm.

Le choix des matériaux de ces couches d'interface est guidé par le coût des matériaux cibles qui doit être le plus faible possible, et par la neutralité (absence de réactivité) des matériaux de ces couches d'interface vis-à-vis de l'oxyde de vanadium.

Avantageusement, les couches d'interface e) comprennent, depuis la couche diélectrique, une première couche constituée de SiO₂, puis une seconde couche constituée de Si₃N₄.

En effet, le coût du matériau cible Si est particulièrement faible, et les métaux (ou métalloïdes) oxydés (SiO₂) ou nitrurés (Si₃N₄) de ces couches d'interface présentent une excellente neutralité vis-à-vis de l'oxyde de vanadium.

La couche de Si₃N₄, peut être appelée couche tampon, tandis que la couche de SiO₂ peut être appelée simplement couche d'interface.

Avantageusement, la première couche, constituée de SiO₂, a une épaisseur de 5 à 15 nm, par exemple de 10 nm, et la seconde couche constituée de Si₃N₄, a une épaisseur de 100 à 140 nm, par exemple de 120 nm.

Avantageusement, les couches d'interface c) et e), sont disposées de manière symétrique de part et d'autre de la couche de la couche diélectrique en CeO₂.

Le matériau thermochrome actif dans l'infrarouge f) est de l'oxyde de vanadium IV, VO₂ dopé de type n, et cristallisé.

Les performances optiques du dispositif selon l'invention sont produites par une transition métal conducteur/semi-conducteur, plus exactement par la transition entre une phase rutile conductrice électronique de l'oxyde de vanadium IV, VO₂ dopé et cristallisé, et une phase monoclinique et semi-conductrice électronique de l'oxyde de vanadium IV, VO₂ dopé et cristallisé.

Cette transition se produit à une température dite température de commutation Tc. Lorsque l'oxyde de vanadium IV, VO₂ dopé et cristallisé, est à une température inférieure à Tc, il se trouve dans la phase monoclinique semi-conductrice, et lorsque l'oxyde de vanadium IV, VO₂ dopé et cristallisé, est à une température supérieure à Tc, il se trouve alors dans la phase rutile métallique conductrice.

Pour l'oxyde de vanadium VO₂, non dopé, Tc est de 68°C. On dit qu'il commute à 68°C.

L'oxyde de vanadium IV, VO₂, est dopé de type n.

En effet, un dopage de type n de l'oxyde de vanadium IV permet d'abaisser sa température de commutation Tc, en-dessous de 68°C.

L'oxyde de vanadium IV, VO₂, peut être dopé de type n par des lacunes d'oxygène et/ou par substitution des cations V⁴⁺ à l'aide de cations métalliques Zⁿ⁺ de valence n supérieure à 4.

L'oxyde de vanadium IV, VO₂, peut donc être dopé de type n uniquement par des lacunes d'oxygène.

L'oxyde de vanadium dopé de type n uniquement par des lacunes d'oxygène, qui est donc un oxyde de vanadium sous stœchiométrique en oxygène, répond à la formule VO₂₋ₓ, où x vaut de 0 exclus à 0,25 inclus, de préférence de 0,1 à 0,25.

Le dopage de type n par des lacunes d'oxygène peut être effectué par un contrôle précis des conditions de dépôt d'un oxyde de vanadium IV sous stœchiométrique en oxygène.

L'oxyde de vanadium IV, VO₂, peut être dopé de type n uniquement par substitution des cations V⁴⁺ à l'aide de cations métalliques Zⁿ⁺ de valence n supérieure à 4.

L'oxyde de vanadium dopé de type n uniquement par substitution des cations V⁴⁺ à l'aide de cations métalliques Zⁿ⁺ de valence n supérieure à 4, répond à la formule V_{1-y}Z_{y}O₂, où y vaut de 0,01 à 0,03, par exemple 0,02.

y représente le taux de dopage en cations métalliques exprimée en % atomiques de l'oxyde de Vanadium VO₂. Ainsi, par exemple, si le taux de dopage est de 2% atomiques, alors y sera égal à 0,02.

n est supérieur à 4, et peut être égal par exemple à 5, ou 6.

Z peut être choisi parmi Nb, Ta, Mo, ou W, de préférence Z est W.

De préférence, les cations métalliques Zⁿ⁺ sont des cations W⁶⁺.
Le rendement de la substitution des cations V⁴⁺ par des cations métalliques W⁶⁺, est de-25°C par % at. de W avec la technique de pulvérisation cathodique.
Autrement dit, à chaque fois qu'un atome de vanadium sur 100 est substitué par un atome de tungstène, on abaisse la température de commutation de la solution solide résultante V_{1-y}W_{y}O₂ de 25°C. Ainsi, si y vaut 0,01 (1% de dopage), alors Tc vaut 68-25 = 43°C, et si y vaut 0,02 (2% de dopage), alors Tc vaut 68-2x25 = 18°C. Une Tc de 68°C est la Tc de VO₂ non dopé.
Pour des valeurs de y supérieures à 0,03, l'efficacité du dopage s'atténue car la solution solide est saturée, et il y a apparition de défauts tels que des clusters de WO_{z} où z est compris entre 1 et 2.

L'oxyde de vanadium IV, VO₂, peut être dopé de type n à la fois par des lacunes d'oxygène et par substitution des cations V⁴⁺ à l'aide de cations métalliques Zⁿ⁺ de valence n supérieure à 4.

L'oxyde de vanadium dopé de type n à la fois par des lacunes d'oxygène et par substitution des cations V⁴⁺ à l'aide de cations métalliques Zⁿ⁺ de valence n supérieure à 4, répond à la formule V_{1-y}Z_{y}O₂₋ₓ où x et y ont déjà été définis plus haut.

Le dopage aux cations zⁿ⁺, par exemple aux cations W⁶⁺, de VO₂ non dopé ou de VO₂₋ₓ déjà dopé par des lacunes d'oxygène, est réalisé en intercalant des couches ultrafines, à savoir d'une épaisseur de 0,1 à 0,5 nm de métal Z, par exemple de tungstène métallique entre des couches d'oxyde de vanadium IV VO₂ non dopé ou entre des couches de VO₂₋ₓ déjà dopé par des lacunes d'oxygène, puis en chauffant l'ensemble de ces paires de couches VO₂/Z ou VO₂₋ₓ/Z, par exemple à 500°C (voir étape f) du procédé) sous une atmosphère d'argon/oxygène contenant au moins 96% d'Argon, afin de cristalliser le matériau thermochrome par recuit, par exemple à 500°C (voir étape f) du procédé), pour produire le composé V_{1-y}Z_{y}O₂, ou le composé V_{1-y}Z_{y}O₂₋ₓ, par exemple V_{0.98}W_{0.02}O₂₋ₓ.

Le revêtement de protection solaire, réflecteur solaire, transparent dans l'infrarouge g) (sur tout l'IR moyen : de 2,5 à 25 µm avec un pic d'absorption à 9 µm), est généralement constitué par un miroir de Bragg.

De préférence, ce miroir de Bragg est constitué par une alternance d'une couche d'un oxyde métallique de haut indice de réfraction (n de 2 à 2,5, par exemple 2,2) et d'une couche d'un oxyde métallique de faible indice de réfraction (n de 1,3 à 1,8, par exemple 1,5).

Le miroir de Bragg peut être un miroir de Bragg à double centrage, centré dans le domaine du proche infrarouge sur 825 nm et dans le domaine du visible sur 550 nm.

Le dispositif selon l'invention comprend un empilement spécifique de couches spécifiques, d'une épaisseur spécifique, dans un ordre spécifique qui n'a jamais été décrit dans l'art antérieur tel que représenté notamment par les documents relatifs à des dispositifs thermochromes« tout-solide » mentionnés plus haut.

En particulier, le dispositif selon l'invention comprend une couche d'un matériau thermochrome, actif dans l'infrarouge, qui est une couche en un matériau spécifique, à savoir de l'oxyde de vanadium VO₂ dopé et cristallisé, dans une phase monoclinique ou rutile. Cette couche thermochrome en un matériau spécifique possède en outre une épaisseur spécifique, à savoir une épaisseur de 30 à 50 nm, de préférence de 30 à 40 nm. Cette couche thermochrome peut donc être qualifiée de couche très mince ou très fine.

Cette couche thermochrome constituée par un matériau thermochrome spécifique, est disposée au-dessus d'une couche diélectrique inorganique isolante électronique et transparente au rayonnement infrarouge, qui est une couche en un matériau spécifique, à savoir de l'oxyde de cérium CeO₂. Cette couche diélectrique inorganique possède en outre une épaisseur spécifique, à savoir une épaisseur de 400 à 900 nm, de préférence de 700 nm à 900 nm. Cette couche diélectrique peut donc être qualifiée de couche de forte épaisseur.

Le dispositif thermochrome tout-solide selon l'invention est donc notamment caractérisé en ce qu'il comprend la combinaison d'une couche très fine d'un matériau thermochrome spécifique sur une couche d'un matériau diélectrique spécifique de forte épaisseur.

Le dispositif selon l'invention se différencie notamment du dispositif décrit dans le document US-A1-2014/0139904 cité plus haut, en ce que CeO₂ est totalement transparent dans l'Infrarouge, ce qui n'est pas le cas des autres oxydes cités par le document US-A1-2014/0139904. En outre, CeO₂ est un oxyde non toxique, alors que les composés les plus transparents cités dans ce document, sont des fluorures ou des sulfures très toxiques, dont le dépôt comporte des risques chimiques conséquents rendant la fabrication industrielle des dispositifs très contraignante, voire impossible, à cause de la norme REACH.

La couche thermochrome du dispositif selon l'invention, est très fine et repose sur une couche isolante épaisse de CeO₂, ainsi que sur des couches d'interface qui sont elles aussi isolantes sur fond réflecteur IR.

De ce fait, lorsque cette couche thermochrome est chauffée au-dessus de la température de commutation Tc, et qu'elle se trouve donc dans son état métallique, elle possède alors une transparence IR résiduelle qui permet d'obtenir des propriétés d'absorption IR ou d'émissivité IR pour l'ensemble du dispositif.

La fonction diélectrique globale en forte épaisseur, constituée des couches de CeO₂ et des couches d'interface, sert à piéger, puis à évacuer les radiations infrarouge lorsque T>Tc pour la couche thermochrome à l'état métallique. Ce phénomène ne se produit pas lorsque T<Tc car la couche thermochrome est semi-conductrice à caractère isolant. Lorsque T<Tc, la fonction diélectrique devient inactive vis-à-vis du rayonnement IR provenant de la paroi, et le fond métallique conducteur électronique renvoie la chaleur vers l'intérieur de l'habitacle.

Si cette couche thermochrome était plus épaisse, par exemple d'une épaisseur supérieure à 100 nm, elle serait alors opaque au rayonnement infrarouge et réflectrice du rayonnement infrarouge au-dessus de Tc, à cause de ses propriétés métalliques. L'ensemble du dispositif serait alors réflecteur IR et ne pourrait pas évacuer la chaleur.

Lorsque le dispositif est chauffé à une température supérieure à Tc, il présente une forte émissivité IR.

On peut considérer que la caractéristique fondamentale nouvelle et inventive du dispositif selon l'invention, consiste en l'élaboration et en l'intégration d'un matériau thermochrome spécifique à base de d'oxyde de vanadium IV (VO₂) sous la forme d'une couche très fine, au sein d'un dispositif tout-solide réflecteur, commutable dans l'infrarouge (IR) et de faible absorptivité solaire.

Grâce à la présence d'un matériau transparent aux infrarouges IR composé d'oxyde de cérium IV sous la forme d'une couche de forte épaisseur (400 à 900 nm) situé derrière la couche très fine de matériau thermochrome, le dispositif devient absorbant à haute température, à savoir à une température supérieure à Tc, et produit une forte émissivité vers l'extérieur de la paroi pourvue du dispositif.

A basse température, à savoir à une température inférieure à Tc, le dispositif reste réflecteur et permet de conserver la chaleur.

Autrement dit, la caractéristique fondamentale nouvelle et inventive du dispositif selon l'invention consiste en l'intégration d'un matériau actif thermochrome à fonctionnement infrarouge (IR, de 2,5 à 25 µm) en face avant d'un dispositif thermochrome opaque IR à réflectivité/émissivité variable et recouvert d'une protection solaire.

Lorsqu'il est soumis à une température élevée, le dispositif devient fortement absorbant dans l'infrarouge moyen, de 2,5 à 25 µm, mais pas dans le proche infrarouge (de 0,78 à 1,1 µm, zone d'absorption maximale de la chaleur du soleil), grâce à l'apposition d'un revêtement de protection solaire, tel qu'un miroir de Bragg réflecteur solaire.

Le dispositif selon l'invention est donc faiblement absorbant dans le domaine solaire (qui comprend le proche IR de 0,78 à 2,5 µm) et fortement émissif dans le domaine de l'infrarouge moyen, ce que lui permet tout d'abord de rejeter une partie de la chaleur provenant du soleil, depuis l'extérieur (apports solaires directs dans la zone du proche infrarouge), et d'évacuer la chaleur emmagasinée par les éléments internes (électronique des satellites, objets dans une pièce d'un bâtiment ou dans l'habitacle d'une automobile) par rayonnement infrarouge (moyen, de 2,5 à 25 µm) vers l'extérieur de la paroi pourvue du dispositif.

Le matériau thermochrome est, selon l'invention, un oxyde de vanadium dopé, par exemple au tungstène et cristallisé, en couche très fine (30 à 50 nm), déposé sur une couche diélectrique d'oxyde de cérium en forte épaisseur (400 à 900 nm), nécessaire à la réalisation d'un filtre IR. Le dopage par lacunes d'oxygène est effectué par un contrôle précis des conditions de dépôt de l'oxyde de vanadium IV sous stœchiométrique.

Le dispositif selon l'invention peut être défini comme un dispositif tout-solide thermochrome à réflexion ou émissivité modulable dans l'infrarouge (IR) en particulier dans l'infrarouge moyen (longueurs d'onde de 2,5 à 25 µm) dont la partie active est une couche de matériau thermochrome, actif dans l'infrarouge qui est selon l'invention située en face avant du dispositif.

Le fait de disposer la partie active du dispositif thermochrome, à savoir la couche du matériau thermochrome, actif dans l'infrarouge, en face avant du dispositif, c'est-à-dire du côté du dispositif qui est directement exposé aux rayons du soleil est à l'origine de nombre des avantages du dispositif selon l'invention.

On peut dire que le dispositif selon l'invention est réalisé selon une conception optimisée qui n'a jamais été décrite ni suggérée dans l'art antérieur relatif aux dispositifs thermochromes « tout-solide ».

Le dispositif thermochrome « tout-solide » selon l'invention est compatible avec toutes les exigences qui régissent une utilisation dans l'espace, en effet les matériaux entièrement inorganiques qui le constituent lui permettent de résister aux agressions UV, au vide, et aux températures élevées, par exemple voisines de 100°C, au contraire des dispositifs souples existants dont les électrolytes gels supportent mal une mise sous vide et dont les polymères se déforment sous l'effet de la chaleur et sont peu résistants aux UV.

Le dispositif selon l'invention peut être qualifié, de dispositif thermochrome robuste, durable, de conception simplifiée.

Le dispositif selon l'invention présente, en outre, l'avantage de pouvoir être réalisé très simplement, en un nombre limité d'étapes, par un seul et même procédé de dépôt pour toutes les couches.

Le dispositif selon l'invention peut donc être réalisé en une durée réduite et avec des coûts réduits.

Ainsi, le dispositif selon l'invention (y compris les étapes f) et g) : voir ci-dessous) peut être entièrement réalisé sous vide, en continu, à l'aide d'une seule et même technologie de dépôt physique en phase vapeur (« *PVD* » ou « *Physical Vapour Déposition* » en anglais) choisi par exemple parmi la pulvérisation cathodique magnétron, l'ablation laser, ou l'évaporation, dans une même enceinte de dépôt et sans ouverture de cette enceinte avant que le dispositif ne soit obtenu.

Pour des raisons technico-économiques, la pulvérisation cathodique magnétron en mode réactif est privilégiée, car elle permet un contrôle du taux d'oxygène dans le plasma, des vitesses de dépôt élevées, et qu'elle assure une excellente qualité optique du matériau actif thermochrome.

L'invention concerne aussi un procédé de préparation du dispositif selon l'invention, tel que décrit plus haut, dans lequel on réalise les étapes successives suivantes :
a) on dépose une couche réflectrice dans l'Infrarouge en un matériau conducteur électronique sur un substrat solide en un matériau inorganique résistant jusqu'à une température de 550°C
b) on dépose des couches d'interface isolantes électroniques sur la couche réflectrice dans l'Infrarouge déposée lors de l'étape a) ;
c) on dépose une couche diélectrique inorganique isolante électronique et transparente au rayonnement infrarouge, en oxyde de cérium CeO₂, d'une épaisseur de 400 à 900 nm, de préférence de 700 à 900 nm sur les couches d'interface déposées lors de l'étape b);
d) on dépose des couches d'interface isolantes électroniques sur la couche diélectrique isolante électronique et transparente au rayonnement infrarouge, en oxyde de cérium CeO₂ déposée lors de l'étape c) ;
e) on dépose une couche d'un matériau thermochrome, actif dans l'infrarouge, qui est un oxyde de vanadium VO₂ non dopé, ou un oxyde de vanadium dopé par des lacunes d'oxygène VO₂₋ₓ, dans une phase monoclinique, sur les couches d'interface déposées lors de l'étape d), et on intercale des couches ultrafines, à savoir d'une épaisseur de 0,1 à 0,5 nm de métal Z, par exemple de tungstène métallique dans la couche d'oxyde de vanadium VO₂ non dopé, ou on intercale éventuellement des couches ultrafines, à savoir d'une épaisseur de 0,1 à 0,5 nm de métal Z, par exemple de tungstène métallique dans la couche d'oxyde de vanadium dopé par des lacunes d'oxygène VO₂₋ₓ ;
f) on recuit le substrat, et les couches déposées lors des étapes a) à e) à une température de plus de 450°C à moins de 550°C (c'est à dire à une température de 450°C à 550°C, les bornes, valeurs, de 450°C et 550°C étant exclues), de préférence de 460°C à 540°C, de préférence encore de 500°C, de manière à cristalliser le matériau thermochrome ;
g) on dépose un revêtement de protection solaire, réflecteur solaire, transparent dans l'infrarouge, sur la couche d'un matériau thermochrome.
La température de recuit lors de l'étape f) est de plus de 450°C, et de moins de 550°C, car, à 450°C la cristallisation n'est pas complète, et à 550°C le substrat, par exemple de verre ou de silicium, commence à se dégrader.

On peut noter que la température de recuit de plus de 450°C, et de moins de 550°C, par exemple de 500°C, sert à faire croître les grains de matière tout en faisant diffuser les atomes dopants, par exemple de W⁶⁺, dans le réseau cristallographique de VO₂ (c'est ce qu'on appelle une solution solide), mais cette température ne fige pas la phase cristallographique, qui varie avec la température du milieu ambiant par rapport à Tc.
En effet, par exemple, le matériau thermochrome est dans sa phase rutile à 22°C pour un dopage à 2% at. en W, car Tc = 15°C, et le matériau thermochrome est dans sa phase monoclinique à 22°C pour un dopage à 1% at. en W, car alors Tc = 35°C.

Le recuit, à une température de plus de 450°C et de moins de 550°C par exemple à 500°C, de l'ensemble du substrat et de l'empilement de couches minces déposées lors des étapes a) à e) s'avère nécessaire afin de cristalliser la phase thermochrome à base de VO₂, semi-conductrice à froid (température inférieure à Tc) et conductrice électronique à chaud (température supérieure à Tc).

Avantageusement, le recuit du substrat et des couches déposées lors des étapes a) à e) est réalisé sous une atmosphère d'Argon et d'oxygène contenant au moins 96% en volume d'Argon.

Le procédé selon l'invention est fiable et beaucoup plus simple que les procédés de l'art antérieur tels que ceux décrits dans les documents cités plus haut.

Avantageusement, les couches et le revêtement de protection solaire sont déposées par un procédé de dépôt Physique en phase vapeur ou PVD choisi parmi la pulvérisation cathodique magnétron, l'ablation laser et l'évaporation.

Avantageusement, toutes les couches et le revêtement de protection solaire g), sont déposés sous vide par un même procédé de dépôt physique en phase vapeur, de préférence par pulvérisation cathodique magnétron, par exemple par pulvérisation cathodique magnétron réactive.

En effet, dans l'optique d'une industrialisation, il est intéressant d'utiliser la même technique de dépôt pour toutes les couches de l'empilement (y compris le revêtement de protection solaire, tel qu'un réseau de Bragg), afin de d'affranchir de tout risque de pollution des interfaces.

Pour des raisons technico-économiques, et comme on l'a déjà indiqué, la pulvérisation cathodique magnétron en mode réactif sera privilégiée car elle assure notamment un bon contrôle du taux d'oxygène dans le plasma, des vitesses de dépôt élevées, par exemple d'environ 60 nm/min et une bonne qualité optique du matériau actif thermochrome.

Seul le CeO₂ est déposé en mode non réactif à partir d'une cible d'oxyde.

En effet, les meilleures performances pour la couche de matériau thermochrome VO₂ dopé, par exemple au tungstène, sont obtenues par pulvérisation cathodique magnétron.

Toutes les couches minces de l'empilement sont donc avantageusement déposées par la technique de pulvérisation cathodique magnétron, généralement à l'aide d'un gaz plasmagène comprenant de l'argon.

Dans le cas du matériau thermochrome, le dépôt de VO₂, éventuellement dopé par des lacunes d'oxygène, peut être réalisé par pulvérisation cathodique magnétron réactive à partir d'une cible de vanadium sous atmosphère d'argon, avec un taux d'oxygène précis et maîtrisé dans l'enceinte de dépôt.

Un dopage du VO₂ par exemple à l'aide de tungstène métallique, notamment sous la forme de couches ultrafines de W incorporées dans le VO₂ permet d'abaisser la plage de température active (Tc) autour de 15°C.

Avantageusement, toutes les étapes y compris les étapes f) et g) sont réalisées dans une même enceinte sous vide, en continu, sans ouverture de l'enceinte entre chacune des étapes, ce qui occasionne une simplification importante du procédé, un gain de temps important, et des coûts réduits.

En effet, afin de fluidifier le procédé et d'en diminuer le coût global, il est avantageux de réaliser le dispositif en continu, sous vide, et sans ouverture machine.

L'invention concerne, en outre, l'utilisation du dispositif tel que décrit plus haut pour la protection thermique d'un objet, en particulier d'un satellite, d'un bâtiment ou d'un habitacle d'un véhicule (automobile, aéronef, train, navire ou autre).

D'autres avantages de l'invention apparaîtront mieux à la lecture de la description détaillée qui va suivre faite en relation avec les dessins joints.

### BRÈVE DESCRIPTION DES DESSINS

- La Figure 1 est une vue schématique du dispositif selon l'invention.
- La Figure 2 est un graphique qui montre la réflectivité infrarouge du fond métallique réflecteur du dispositif selon l'invention, préparé dans l'étape 1 de l'exemple.
   En ordonnée est portée la réflectivité, et en abscisse est portée la longueur d'onde (en µm).
- La Figure 3 est un graphique qui représente la variation de l'émissivité, produite par un dispositif obtenu à l'issue de l'étape 5 de l'exemple avec un dopage au tungstène à 2%, d'épaisseur active 40 nm et de surface 2,5x2,5 cm², intégrée de 2,5 à 25 µm, en fonction de la température, par rapport à l'émissivité d'un corps noir porté à la même température.
   En ordonnée est portée l'émissivité ε, et en abscisse est portée la température T (en °C). Il apparaît que Δε = 0,3 avec Tc = 15°C sur une plage de commutation de 5 à 25°C.
- Les Figures 4A et 4B sont des graphiques qui montrent les indices optiques (indice de réfraction n et coefficient d'extinction k) dans l'infrarouge des constituants du miroir solaire préparé dans l'étape 6 de l'exemple, à savoir de l'oxyde CeO₂ (Figure 4A) et de l'oxyde SiO₂ (Figure 4B), obtenus à partir des spectres de réflexion et de transmission de couches modèles de CeO₂ et de SiO₂ d'une épaisseur de 200 nm déposées sur du silicium.
   En ordonnée sont portés les indices optiques n et k, et en abscisse est portée la longueur d'onde (en nm). Il apparaît que le matériau CeO₂ est complètement transparent au rayonnement IR de 2,5 à 16 µm (k=0). En revanche, le matériau SiO₂ présente un pic d'absorption à 9 µm (bande phonons) entachant sa transparence IR.

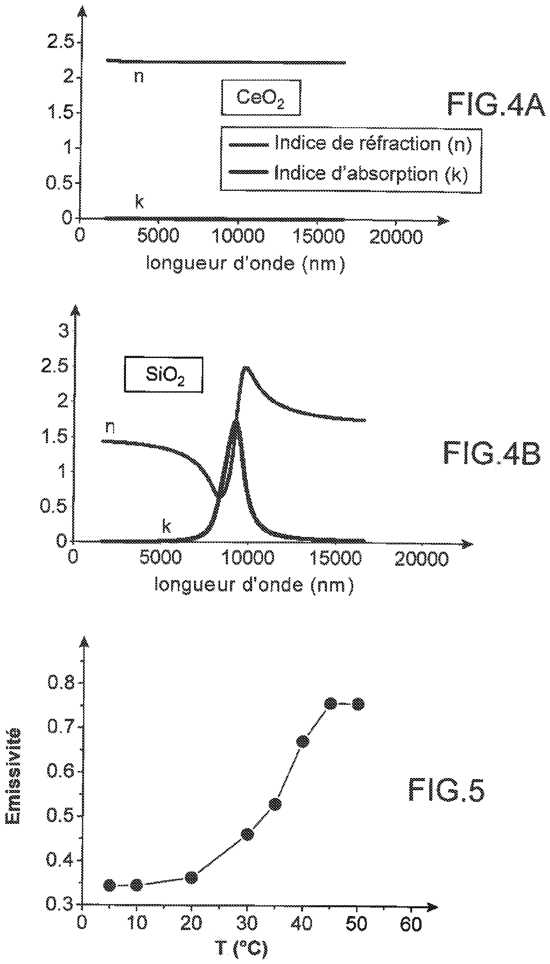

- La Figure 5 est un graphique qui représente la variation de l'émissivité produite par un dispositif, obtenu à l'issue de l'étape 5 de l'exemple avec un dopage au tungstène à 1%, d'épaisseur active 50 nm et de surface 5x5 cm², intégrée de 2,5 à 25 µm, en fonction de la température, par rapport à l'émissivité d'un corps noir porté à la même température. Ce dispositif n'est pas recouvert d'une protection solaire.
   En ordonnée est portée l'émissivité, et en abscisse est portée la température T (en °C). Il apparaît que Δε = 0,4 avec Tc = 35°C sur une plage de commutation de 20 à 50°C.

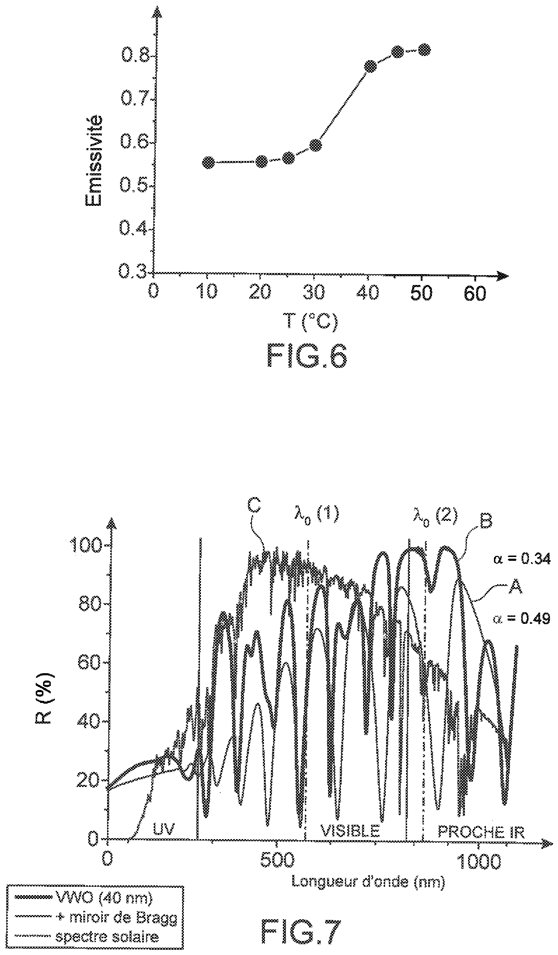

- La Figure 6 est un graphique qui représente la variation de l'émissivité produite par un dispositif, obtenu à l'issue de l'étape 5 de l'exemple avec un dopage au tungstène à 1%, d'épaisseur active 50 nm et de surface 5x5 cm², intégrée de 2,5 à 25 µm, en fonction de la température, par rapport à l'émissivité d'un corps noir porté à la même température. Ce dispositif qui est conforme à l'invention, est en outre recouvert d'une protection solaire préparée comme dans l'étape 6.
   En ordonnée est portée l'émissivité, et en abscisse est portée la température T (en °C). Il apparaît que Δε = 0,3 avec Tc = 35°C sur une plage de commutation de 20 à 50°C.
- La Figure 7 est un graphique qui représente la variation de la réflexion solaire R (c'est le coefficient de réflexion R mesuré dans le domaine du rayonnement solaire de 0,28 à 2,5 µm, ici tronqué à 1,1 µm) (en %) à 22°C, en fonction de la longueur d'onde (en nm) pour :
   - Un dispositif, obtenu à l'issue de l'étape 5 de l'exemple, comprenant une couche d'une épaisseur de 40 nm de matériau actif thermochrome (VO₂ dopé avec 2% de tungstène) (Courbe A).
   - Un dispositif, obtenu à l'issue de l'étape 5 de l'exemple, comprenant une couche d'une épaisseur de 40 nm de matériau actif thermochrome (VO₂ dopé au tungstène) et est recouvert, en outre, d'une protection solaire constituée par un miroir de Bragg à double centrage [λ₀ (1) = 550 nm et λ₀ (2)= 825 nm] préparée comme dans l'étape 6 de l'exemple (Courbe B).
   - Sur la Figure 7 est également porté le spectre solaire (Courbe C).

   Il apparaît que l'apposition de la protection solaire permet de réduire le coefficient d'absorption solaire α de 0,49 à 0,34.

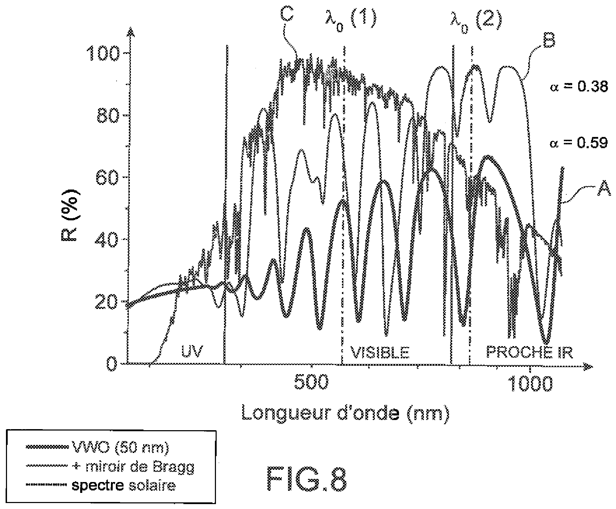

- La Figure 8 est un graphique qui représente la variation de la réflexion solaire R (c'est le coefficient de réflexion R mesuré dans le domaine du rayonnement solaire de 0,28 à 2,5 µm, ici tronqué à 1,1 µm) (en %) à 22°C, en fonction de la longueur d'onde (en nm) pour :
   - Un dispositif, obtenu à l'issue de l'étape 5 de l'exemple, comprenant une couche d'une épaisseur de 50 nm de matériau actif thermochrome (VO₂ dopé avec 2% de tungstène) (Courbe A).
   - Un dispositif, obtenu à l'issue de l'étape 5 de l'exemple, comprenant une couche d'une épaisseur de 50 nm de matériau actif thermochrome (VO₂ dopé avec 2% de tungstène) et est recouvert, en outre, d'une protection solaire constituée par un miroir de Bragg à double centrage [λ₀ (1) = 550 nm et λ₀ (2)= 825 nm] préparée comme dans l'étape 6 de l'exemple (Courbe B).

Sur la Figure 8 est également porté le spectre solaire (Courbe C).

Il apparaît que l'apposition de la protection solaire permet de réduire le coefficient d'absorption solaire α de 0,59 à 0,38.

### EXPOSÉ DÉTAILLÉ DE MODES DE RÉALISATION PARTICULIERS

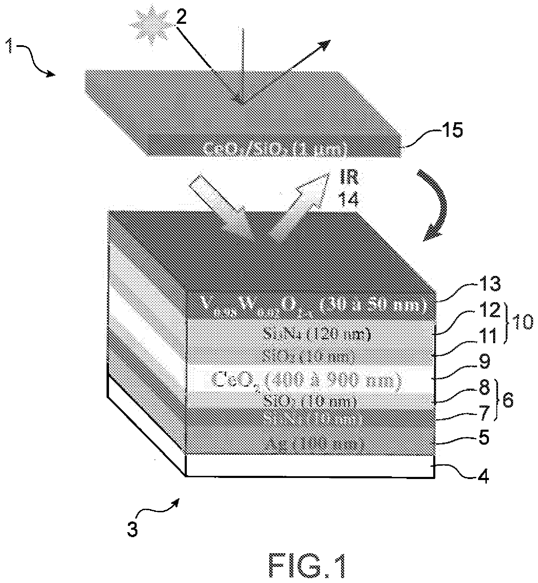

La Figure 1 représente un dispositif thermochrome actif dans l'infrarouge dit tout solide, selon l'invention, qui comprend un empilement inorganique de couches avec une couche en un matériau thermochrome à base d'oxyde de vanadium IV, avec VO₂ dopé.

Il est à noter que les indications portées sur la Figure 1 notamment en ce qui concerne le matériau constitutif de chacune des couches, et du revêtement de protection ne se sont qu'à titre d'exemple, d'illustration, et ne doivent en aucune manière être considérées comme constituant une quelconque limitation.

Ce dispositif comporte une face avant (1) directement exposée au rayonnement solaire (2), et une face arrière (3) collée sur la paroi (ou le vitrage) qui conduit la chaleur vers la face avant pour la réémettre vers l'extérieur du satellite (ou du bâtiment ou du véhicule) par émissivité infrarouge lorsque la température T du dispositif (et donc en particulier celle du matériau thermochrome dont la température T est supérieure à Tc. En fait on peut considérer que T paroi = T dispositif = T matériau thermochrome car le dispositif est constitué d'un empilement de couches minces) est supérieure à Tc, en phase chaude, ou qui conserve la chaleur à l'intérieur du satellite (ou du bâtiment ou du véhicule) lorsque la température T du dispositif est inférieure à Tc, en phase froide, avec une faible émissivité (sans ensoleillement dans le cas d'un satellite ou avec un soleil d'hiver dans le cas d'un bâtiment ou un habitacle d'un véhicule tel qu'une automobile).

Le dispositif selon l'invention comprend tout d'abord un substrat ou support (4), qui joue essentiellement un rôle de support mécanique du dispositif.

Le substrat ou support (4) ne présente généralement pas de transparence aux rayons infrarouges.

Le substrat ou support solide (4) est en un matériau inorganique résistant jusqu'à une température de 550°C, notamment jusqu'à une température de 540°C, par exemple jusqu'à une température de 500°C, notamment sous une atmosphère d'argon et d'oxygène contenant au moins 96% en volume d'Argon.

Par matériau inorganique résistant jusqu'à une température de 550°C, notamment jusqu'à une température de 540°C, par exemple jusqu'à une température de 500°C, on entend généralement que ce matériau n'est pas mécaniquement, physiquement ou chimiquement dégradé lorsqu'il est exposé à une telle température.

Des matériaux qui conviennent particulièrement bien en tant que matériau du substrat solide sont l'aluminium, le silicium, et les verres borosilicates.

Avantageusement, le substrat (4) se présente sous la forme d'une couche, ou feuille, de préférence d'une couche, ou feuille d'une épaisseur de 0,3 à 1 mm, par exemple d'une épaisseur de 0,5 mm. Il peut s'agir par exemple d'un substrat de silicium d'une épaisseur de 0,5 mm, dont la face destinée à recevoir les couches ultérieures est polie.

Sur le substrat ou support (4) est disposée une couche réflectrice (5), aussi appelée fond réflecteur. Cette couche est en un matériau conducteur électronique.

De préférence, ce matériau conducteur électronique est choisi parmi les métaux, les alliages métalliques, et les oxydes métalliques conducteurs électroniques, tels que l'oxyde d'indium dopé à l'étain ou ITO, l'oxyde d'étain dopé au fluor ou FTO, l'oxyde d'étain dopé à l'antimoine ATO, et l'oxyde de zinc dopé à l'aluminium AZO, de préférence encore la couche réflectrice est en argent.

La couche réflectrice possède généralement entre 60% et 100% de réflectivité dans l'Infrarouge moyen, de préférence 100%.

La couche réflectrice (5) a généralement une épaisseur de 80 à 150 nm, de préférence de 100 nm.

Les métaux qui peuvent constituer la couche réflectrice (5), peuvent être choisis par exemple, parmi les métaux nobles comme l'or, l'argent ou le platine ; l'aluminium, le chrome, et leurs alliages.

Un métal préféré est l'argent, et dans ce cas l'épaisseur de la couche réflectrice (5) est de préférence de 100 nm.

Les oxydes métalliques conducteurs électroniques sont bien connus de l'homme du métier.

Des exemples de tels oxydes conducteurs sont l'oxyde d'indium dopé à l'étain (« *Indium Tin Oxide* » ou ITO en anglais), l'oxyde d'étain SnO₂ dopé ou fluor (« *Fluor Tin Oxide* » ou FTO en anglais) l'oxyde d'étain dopé à l'antimoine (« *Antimony Tin Oxide* » ou ATO en anglais), ou l'oxyde de zinc dopé à l'aluminium (« *Aluminum Zinc Oxide* » ou AZO en anglais), que l'on doit combiner de préférence avec des couches d'interfaces à base d'aluminium pour éviter la formation du composé lacunaire □(sites vacants de la structure spinelle) AlSiO₄. Il en est de même avec un fond réflecteur en aluminium.

Le matériau conducteur électronique de ladite couche réflectrice (5), notamment lorsqu'il s'agit d'un oxyde métallique conducteur électronique est généralement choisi parmi les matériaux qui peuvent être déposés en couche mince par un procédé PVD, tel que la pulvérisation cathodique, l'ablation laser ou l'évaporation, et de préférence parmi les matériaux qui peuvent être déposés en couche mince par pulvérisation cathodique.

Sur la figure 1, la couche réflectrice (5) est une couche d'argent d'une épaisseur de 100 nm.

Sur la couche réflectrice (5) sont disposées des couches d'interface (6).

Ces couches d'interface (6) permettent d'assurer l'adhérence de la couche diélectrique (9) sur la couche réflectrice (5).

Les couches d'interface, peuvent, de préférence doivent, être au nombre de 2.

La nature de ces couches d'interface est choisie de manière à assurer la meilleure adhérence de la couche diélectrique (9) sur la couche réflectrice (5).

Ainsi, sur la Figure 1, le dispositif comporte une première couche nitrurée (7) pour passiver l'argent, et une deuxième couche oxydée (8) pour lier l'oxyde de cérium.

Les couches d'interface (6) peuvent avoir une épaisseur totale de 10 à 30 nm et chaque couche peut avoir une épaisseur de 5 à 15 nm.

Généralement les deux couches ont la même épaisseur.

Les matériaux des couches d'interface (6) sont choisis de manière à assurer la meilleure adhérence de la couche diélectrique (9) sur la couche réflectrice (5).

Les matériaux des couches d'interface (6) sont également généralement choisis parmi les matériaux qui peuvent être déposés en couche mince par un procédé PVD, tel que la pulvérisation cathodique, l'ablation laser ou l'évaporation, et de préférence parmi les matériaux qui peuvent être déposés en couche mince par pulvérisation cathodique.

Des matériaux adéquats sont par exemple SiO₂ et Si₃N₄ et les couches d'interface peuvent alors comprendre une couche de Si₃N₄ (7), et une couche de SiO₂ (8).

Sur le mode de réalisation représenté sur la Figure 1, les couches d'interface (6) comprennent, depuis la couche réflectrice, une première couche constituée de Si₃N₄ ou de AIN (7), puis une seconde couche constituée de SiO₂ ou de Al₂O₃ (8).

La couche nitrurée protège l'argent vis-à-vis de l'oxygène introduit lors du dépôt de CeO₂, et la couche oxydée, liée à la couche nitrurée par des liaisons Si-Si ou Al-Al, crée des ponts O-O entre elle-même et la couche de CeO₂.

La première couche constituée de Si₃N₄ (7) peut avoir une épaisseur de 5 à 15 nm, par exemple de 10 nm, et la seconde couche constituée de SiO₂ (8) peut avoir une épaisseur de 5 à 15 nm, par exemple de 10 nm.

Sur la Figure 1, la première couche constituée de Si₃N₄ (7) a une épaisseur de 10 nm, et la seconde couche constituée de SiO₂ (8) a une épaisseur de 10 nm.

Sur les couches d'interface (6), ou plutôt sur la couche d'interface (8) déposée en dernier sur la couche réflectrice, qui est par exemple, dans le mode de réalisation montré sur la Figure 1, une couche de SiO₂ d'une épaisseur de 10 nm, est disposée une couche diélectrique isolante électronique et transparente au rayonnement infrarouge (9) sur une gamme de longueurs d'ondes de 2,5 à 25 µm (IR moyen).

Cette couche diélectrique isolante électronique et transparente au rayonnement infrarouge a une épaisseur de 400 à 900 nm, de préférence de 700 à 900 nm.

Cette couche diélectrique isolante électronique et transparente au rayonnement infrarouge (9) est en oxyde de cérium CeO₂.

Sur la couche diélectrique isolante électronique et transparente au rayonnement infrarouge (9) sont disposées des couches d'interface (10).

Ces couches d'interface (10) permettent d'assurer l'adhérence et l'intégrité de la couche thermochrome (13) déposée sur la couche diélectrique isolante électronique et transparente au rayonnement infrarouge (9), en empêchant la formation du composé CeVO₄ absorbant IR entre 9 et 13 µm.

Les couches d'interface (10) doivent être au nombre de 2 et sont généralement à base de silicium, non réactif avec CeO₂ et avec VO₂.

Ainsi, sur la Figure 1, le dispositif comporte deux couches d'interface (11, 12).

Après liaison de la première couche de SiO₂ (11) avec CeO₂ via des ponts O-O, la deuxième couche de Si₃N₄ (12), appelée couche tampon, beaucoup plus épaisse et adhérente à SiO₂ à l'aide de liaisons Si-Si, empêche toute réactivité de VO₂ avec CeO₂.

La nature des couches d'interface (10) est choisie de manière à assurer la meilleure adhérence et la meilleure intégrité de la couche thermochrome (13) sur la couche diélectrique isolante électronique et transparente au rayonnement infrarouge (9).

Les couches d'interface (10) peuvent avoir une épaisseur totale de 105 à 155 nm. Deux couches d'interface consécutives sont généralement en des matériaux différents.

Les matériaux des couches d'interface (10) sont également choisis de manière à assurer la meilleure adhérence et intégrité de la couche thermochrome (13) sur la couche diélectrique isolante électronique et transparente au rayonnement infrarouge (9).

Les matériaux des couches d'interface (10) sont également généralement choisis parmi les matériaux qui peuvent être déposés en couche mince par un procédé PVD, tel que la pulvérisation cathodique, l'ablation laser ou l'évaporation, et de préférence parmi les matériaux qui peuvent être déposés en couche mince par pulvérisation cathodique.

Sur le mode de réalisation représenté sur la Figure 1 les couches d'interface (10) comprennent, depuis la couche diélectrique isolante électronique et transparente au rayonnement infrarouge (9), une première couche constituée de SiO₂ (11) puis une seconde couche tampon constituée de Si₃N₄ (12).

La première couche constituée de SiO₂ (11) peut avoir une épaisseur de 5 à 15 nm, par exemple de 10 nm, et la seconde couche constituée de Si₃N₄ (12) peut avoir une épaisseur de 100 à 140 nm, par exemple de 120 nm.

Sur la Figure 1, la première couche constituée de SiO₂ (11) a une épaisseur de 10 nm, et la seconde couche constituée de Si₃N₄ (12) a une épaisseur de 120 nm.

Sur la Figure 1 est représentée une forme de réalisation avantageuse, dans laquelle les couches (11), (12) et (7) (8) sont disposées symétriquement de part et d'autre de la couche (9), les couches en SiO₂ étant disposées au contact de chacune des faces de la couche (9).

Sur les couches d'interface (10), ou plutôt sur la couche d'interface (12) déposée en dernier sur la couche réflectrice, qui est par exemple, sur le mode de réalisation montré sur la Figure 1, une couche tampon de Si₃N₄ (12) d'une épaisseur de 120 nm, est disposée une couche (13) d'un matériau thermochrome, actif dans l'infrarouge, qui est un oxyde de vanadium VO₂ dopé et cristallisé, dans une phase monoclinique ou rutile, d'une épaisseur de 30 à 50 nm, de préférence de 30 à 40 nm.

Du fait de sa très faible épaisseur, cette couche (13) d'un matériau thermochrome peut être qualifiée de couche très fine. Cette très faible épaisseur de la couche de matériau thermochrome est l'une des caractéristiques essentielles du dispositif selon l'invention.

L'oxyde de vanadium peut être déposé en couche très mince, très fine, par un procédé PVD tel que la pulvérisation cathodique, l'ablation laser ou l'évaporation, et de préférence par pulvérisation cathodique.

Sur la figure 1, la couche de matériau thermochrome (13) est une couche de V_{0,98}W_{0,02}O₂₋ₓ d'une épaisseur de 30 à 50 nm.

Sur la couche d'un matériau thermochrome, actif dans l'infrarouge, qui est un oxyde de vanadium VO₂ cristallisé et dopé (13), est disposé un revêtement de protection solaire (15), réfléchissant vis-à-vis du rayonnement solaire (2), et transparent aux rayons infrarouges (14) (sur tout l'IR moyen, de 2,5 à 25 µm avec un pic d'absorption à 9 µm).

Par transparent aux rayons infrarouges, on entend généralement que ce revêtement (15) est transparent aux rayons infrarouges de longueurs d'ondes comprises entre 2,5 µm et 25 µm, de préférence entre 2,5 µm et 16 µm.

Ce revêtement (15) est généralement en un matériau inorganique non toxique.

De préférence, ce revêtement (15) est en un matériau choisi parmi les oxydes de métaux et de métalloïdes, et les mélanges de deux ou plus de ces oxydes de métaux et oxydes de métalloïdes.

Ce ou ces oxyde(s) de métaux ou de métalloïdes, de préférence amorphes, sont choisis de préférence parmi les oxydes qui peuvent être facilement déposés par PVD, notamment par pulvérisation cathodique magnétron, à partir d'une cible d'oxyde ou de métal, tel que l'oxyde de cérium CeO₂, l'oxyde d'yttrium Y₂O₃, ou SiO₂.

Le revêtement (15) a généralement une épaisseur de 0,5 à 1,25 µm, de préférence de 1 µm à 1,25 µm, de préférence encore de 1,25 µm.

Ce revêtement (15) est généralement constitué par un miroir de Bragg.

De préférence, ce miroir de Bragg est constitué par une alternance d'une couche d'un oxyde métallique de haut indice de réfraction (n de 2 à 2,5, par exemple 2,2) tel que le CeO₂, et d'une couche d'un oxyde métallique de faible indice de réfraction (n de 1,3 à 1,8, par exemple 1,5), tel que le SiO₂.

Sur la Figure 1, le revêtement (15) comprend une alternance de couches de CeO₂ et de couches de SiO₂ et peut avoir une épaisseur totale de de 0,5 à 1,25 µm, de préférence de 1 µm à 1,25 µm, de préférence encore de 1,25 µm. Cependant, à titre d'exemple, il est indiqué sur la Figure 1 que le revêtement (15) tel que représenté sur cette Figure a une épaisseur de 1 µm. Il est composé de 3 paires de couches de CeO₂ et SiO₂ centrées sur 550 nm d'épaisseurs respectives 55 et 95 nm, puis de 3 paires de couches de CeO₂ et SiO₂ centrées sur 825 nm d'épaisseurs respectives 80 et 150 nm, et d'une couche terminale de CeO₂ de 80 nm.

Le fonctionnement du dispositif de la Figure 1, lorsqu'il équipe par exemple un satellite peut être décrit de la manière suivante.

Dans la phase d'exposition au soleil, l'électronique interne du satellite a besoin d'être protégée de la température élevée, qui peut atteindre 100°C au niveau de la paroi. Le miroir de Bragg situé en face avant du dispositif permet tout d'abord de rejeter le rayonnement solaire par réflexion à plus de 70%, sur la gamme de 0,28 à 2,5 µm.

Cela se traduit par une diminution de l'absorptivité solaire de dispositifs comportant 40 et 50 nm de matériau thermochrome actif IR dopé à 2%, dont les coefficients α passent respectivement de 0,49 à 0,34 (Figure 7) et de 0,59 à 0,36 (Figure 8) après apposition de la protection solaire.

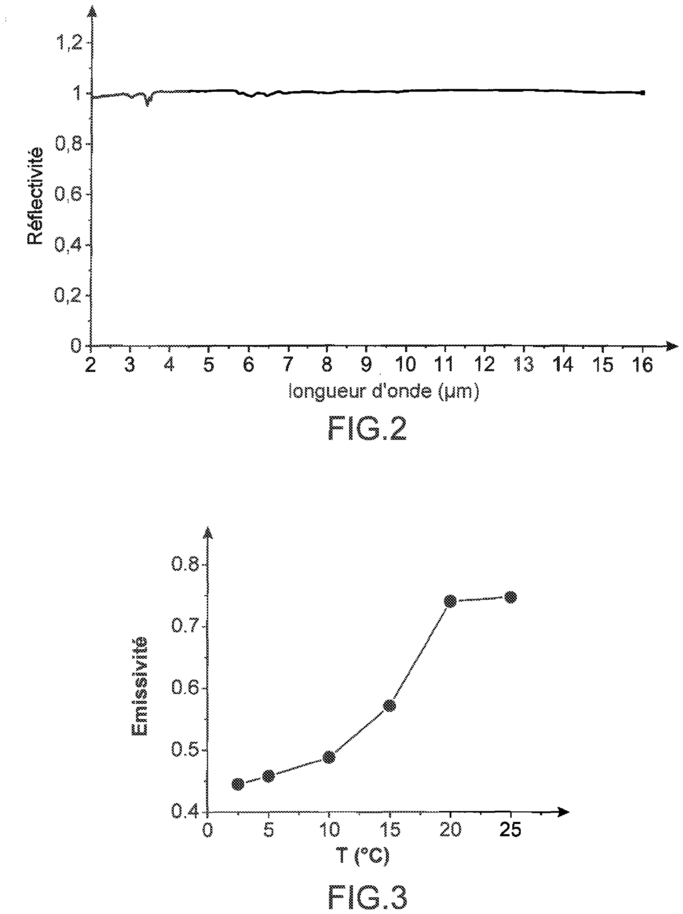

D'autre part, le matériau thermochrome actif IR composé de VO₂ dopé à 2% atomiques de tungstène (y = 0,02) présente un caractère métallique (phase rutile) obtenu à T>Tc avec Tc = 15°C (Figure 3). Sa forte émissivité à haute température ε_{HT}= 0,75) va ainsi produire une évacuation de la chaleur emmagasinée à l'intérieur du satellite par rayonnement infrarouge vers l'extérieur, sur la gamme de 2,5 à 25 µm.

La protection solaire située en face avant a donc besoin d'être transparente dans tout le domaine de l'infrarouge. Il en est de même lorsque le dispositif de la Figure 1 équipe un vitrage pour le bâtiment ou l'automobile. Lorsque le taux de dopage du matériau thermochrome diminue (y = 0,01), Tc remonte à 35°C (Figure 5), et l'apposition du miroir de Bragg a pour effet d'augmenter la valeur de ε_{HT} à 0,85. Cependant, cette amélioration de ε_{HT} s'effectue au détriment de la valeur basse de l'émissivité ε_{BT} qui remonte de 0,35 à 0,55. En l'absence de rayonnement solaire, la conservation de la chaleur à l'intérieur du satellite sera alors moins efficace. Il existe donc un compromis entre la meilleure réjection des apports solaires (obtenue avec l'épaisseur la plus forte du miroir de Bragg, soit 1,25 µm) et la meilleure efficacité énergétique à basse température (obtenue sans protection solaire avec le taux de dopage le plus faible, soit y = 0,01).

Le dispositif selon l'invention est préparé par le procédé décrit plus haut.

L'appareil utilisé pour mettre en œuvre le procédé selon l'invention pour préparer le dispositif selon l'invention peut être par exemple un bâti de dépôt sous vide (« *Physical Vapour Déposition* » ou « *PVD* » en anglais) comprenant :
- une enceinte sous vide, d'un volume par exemple de 0,1 m³ dans laquelle règne une pression initiale par exemple d'environ 5 10⁻⁷ mbar, la vitesse de pompage maximale pour réaliser le vide dans l'enceinte étant de 900 L/s avec une enceinte initialement remplie d'azote ;
- au plus 6 cathodes d'un diamètre de 3 pouces (ou 76 mm), ou bien 2 cathodes d'un diamètre 6 pouces (ou 152 mm) et 2 cathodes d'un diamètre de 3 pouces (ou 76 mm) ;
- chaque dépôt est réalisé par pulvérisation cathodique magnétron à partir d'une cible en métal ou en oxyde de métal, par exemple en Ag, Si, CeO₂, V, ou W, en mode RadioFréquence RF, avec une puissance appliquée de 1 à 10 W/cm² de la cible, ou en mode DC, avec une puissance appliquée de 0,6 à 2 W/cm², afin d'obtenir des vitesses de dépôt lentes ou élevées selon le matériau à déposer et la fragilité de la cible, par exemple de 3 à 120 nm/minute pour CeO₂ et Ag respectivement.
De telles conditions de dépôt permettent l'industrialisation du procédé, qualifié de réactif pour la fabrication des oxydes en couches minces à partir de cibles métalliques, sauf pour CeO₂ dont la cible est une céramique oxydée de même composition (cible fragile).

L'atmosphère de gaz plasmagène dans laquelle est réalisé le dépôt est choisie en fonction du matériau qui constitue la couche déposée.

Ainsi, cette atmosphère peut être constituée :
- d'argon, avec une pression par exemple de 9 10⁻³ mbar, pour le dépôt d'une couche réflectrice en métal, par exemple en argent ;
- d'un mélange d'argon et d'azote, par exemple dans les proportions respectives de 70 à 75% et de 25 à 30 % en volume, avec une pression totale de 2,1 à 2,3 10⁻² mbar par exemple de 2,2 10⁻² mbar, pour le dépôt d'une couche d'interface en Si₃N₄;
- d'un mélange d'argon et d'oxygène, par exemple dans les proportions respectives de 83 à 96 % et de 4 à 17 % en volume, avec une pression totale de 1,7 à 3,3 par exemple de 3,2 10⁻² mbar ou 1,2 10⁻² mbar, ou 1,75 10⁻² mbar pour le dépôt d'une couche d'interface ou d'une couche du revêtement de protection solaire en SiO₂, pour le dépôt d'une couche diélectrique ou d'une couche du revêtement de protection solaire en CeO₂, ou pour le dépôt d'une couche thermochrome active dans l'infrarouge en VO₂.

Le recuit de l'empilement obtenu à l'issue de l'étape e) est effectué dans la même enceinte sous vide où sont réalisés les dépôts.

Généralement, ce recuit est réalisé dans les mêmes conditions (dans une atmosphère similaire à celle utilisée pour le dépôt de VO₂) que les conditions où a été réalisé le dépôt de VO₂, à savoir sous la même pression partielle d'argon/oxygène à 500°C pendant au moins 1 heure.

Le dispositif selon l'invention inorganique, robuste et de conception simplifiée en vue d'une industrialisation, qui peut notamment fonctionner dans le moyen infrarouge, trouve notamment son application dans la protection thermique des satellites.

Par exemple, on pourra utiliser des « tuiles » (« patches ») pour satellites composés de plusieurs dispositifs « tout-solide » thermochromes selon l'invention pour remplacer des volets mécaniques forts consommateurs d'énergie.

L'invention va maintenant être décrite en référence à l'exemple suivant, donné à titre illustratif et non limitatif qui décrit la fabrication d'un dispositif thermochrome selon l'invention, tel que celui représenté sur la Figure 1, par le procédé selon l'invention, mettant en œuvre la technique de pulvérisation cathodique magnétron pour préparer toutes les couches.

### Exemple.

Toutes les couches du dispositif selon l'invention, préparées par le dispositif selon l'invention, sont préparées en mettant en œuvre la même technique, à savoir la technique de pulvérisation cathodique magnétron, dans la même enceinte de pulvérisation cathodique magnétron sous vide (à savoir sous une pression résiduelle inférieure à 10⁻⁶ mbar (vide secondaire) avant introduction des gaz plasmagènes, utilisés lors des phases de dépôt des matériaux en couches minces qui sont quant à elles réalisées sous vide primaire), sous une pression d'argon, ou d'un mélange d'argon et d'azote, ou d'un mélange d'argon et d'oxygène en mode réactif, en maintenant le vide entre le dépôt de deux couches successives et sans ouvrir l'enceinte avant que la dernière couche du dispositif ne soit déposée.

Une cible différente doit cependant être utilisée pour le dépôt de chaque couche contenant un métal différent. Ainsi, les couches d'interfaces ont recours à la même cible (Si), et la couche de protection solaire (ou miroir de Bragg) utilise aussi cette même cible (Si), ainsi que la cible utilisée pour la couche diélectrique (CeO₂). Cinq cibles sont donc nécessaires à la réalisation du dispositif selon l'invention par le procédé selon l'invention, mettant en œuvre la technique de pulvérisation cathodique magnétron à savoir :
- une cible d'argent pour réaliser le fond réflecteur,
- une cible en silicium pour réaliser les couches d'interfaces et la couche à bas indice de réfraction du miroir de Bragg,
- une cible en oxyde de cérium pour réaliser la couche diélectrique et la couche à haut indice de réfraction du miroir de Bragg,
- une cible en vanadium pour réaliser le matériau thermochrome,
- une cible en tungstène pour le dopage du matériau thermochrome.

### 1. Elaboration du fond réflecteur sur le substrat.

La couche métallique qui joue le rôle de fond réflecteur est une couche d'argent d'une épaisseur de 100 nm déposée par pulvérisation cathodique magnétron.

Cette couche d'argent est déposée sur la face polie d'un substrat de silicium d'une épaisseur de 0,5 mm, et d'une surface de 2,5x2,5 cm² ou de 5x5 cm².

La puissance de dépôt est de 90W en mode courant continu DC (V = 380V, I = 0,24A), le diamètre de la cible d'argent est de 75 mm.

La pression d'argon dans l'enceinte est de 9 10⁻³ mbar, et la distance cible-substrat est de 8 cm.

La durée du dépôt est de 50s.

Cette couche d'argent, présente 100% de réflectivité dans l'infrarouge comme le montre la Figure 2 qui représente la réflectivité infrarouge du fond métallique du dispositif selon l'invention, préparé par le procédé selon l'invention.

### 2. Elaboration des couches d'interfaces entre le fond réflecteur et la couche diélectrique principale permettant d'assurer l'adhérence de la couche diélectrique principale sur le fond réflecteur.

La première couche d'interface est composée de Si₃N₄ et a une épaisseur 10 nm.

Elle est déposée sur la couche d'argent qui joue le rôle de fond réflecteur par pulvérisation cathodique magnétron réactive en mode radiofréquence RF, avec une puissance de 250 W appliquée à une cible de silicium de 75 mm de diamètre, sous une atmosphère d'argon et d'azote, injectés respectivement à 60 et 20 sccm, la pression totale dans l'enceinte étant de 2,2 10⁻² mbar.

La durée du dépôt est de 60s.

La deuxième couche d'interface est composée de SiO₂ et a une épaisseur de 10 nm.

Elle est déposée sur la première couche d'interface, composée de Si₃N₄, par pulvérisation cathodique magnétron réactive en mode radiofréquence RF, avec une puissance de 250 W appliquée à une cible de silicium de 75 mm de diamètre, sous une atmosphère d'argon et d'oxygène injectés respectivement à 100 et 20 sccm, la pression totale dans l'enceinte étant de 3,2 10⁻² mbar.

La durée du dépôt est de 60s.

### 3. Elaboration de la couche diélectrique principale.

Cette couche est composée de CeO₂ et a une épaisseur 400 nm.

Elle est déposée sur la deuxième couche d'interface, composée de SiO₂, par pulvérisation cathodique magnétron réactive en mode radiofréquence RF, avec une puissance de 250 W appliquée à une cible de CeO₂ de 175 mm de diamètre, sous une atmosphère d'argon et d'oxygène injectés respectivement à 40 et 3 sccm, la pression totale dans l'enceinte étant de 1,2 10⁻² mbar.

La durée du dépôt est de 120 min.

### 4. Elaboration des couches d'interface entre la couche diélectrique principale et la couche thermochrome.

La première couche d'interface entre la couche diélectrique principale et la couche thermochrome est composée de SiO₂ et a une épaisseur de 10 nm.

Elle est déposée sur la couche diélectrique principale, composée de CeO₂, par pulvérisation cathodique magnétron réactive en mode radiofréquence RF, avec une puissance de 250 W appliquée à une cible de silicium de 75 mm de diamètre, sous une atmosphère d'argon et d'oxygène injectés respectivement à 100 et 20 sccm, la pression totale dans l'enceinte étant de 3,2 10⁻² mbar.

La durée du dépôt est de 60s.

La deuxième couche d'interface entre la couche diélectrique principale et la couche thermochrome est composée de Si₃N₄ et a une épaisseur 120 nm afin d'empêcher toute réactivité entre les matériaux CeO₂ et VO₂ et de jouer ainsi le rôle de couche tampon.

Elle est déposée sur la première couche d'interface entre la couche diélectrique principale et la couche thermochrome, composée de SiO₂, par pulvérisation cathodique magnétron réactive en mode radiofréquence RF, avec une puissance de 250 W appliquée à une cible de silicium de 75 mm de diamètre, sous une atmosphère d'argon et d'azote injectés respectivement à 60 et 20 sccm, la pression totale dans l'enceinte étant de 2,2 10⁻² mbar.

La durée du dépôt est de 12 minutes.

### 5. Elaboration de la couche thermochrome active dans l'infrarouge.

Cette couche est principalement composée de VO₂ et a une épaisseur de 40 à 50 nm.

Elle est déposée sur la deuxième couche d'interface entre la couche diélectrique principale et la couche thermochrome, composée de Si₃N₄, par pulvérisation cathodique magnétron réactive en mode radiofréquence RF, avec une puissance de 450 W appliquée à une cible de silicium de 75 mm de diamètre, sous une atmosphère d'argon et d'oxygène injectés respectivement à 60 et 2,6 sccm, la pression totale dans l'enceinte étant de 1,75 10⁻² mbar.

La durée totale du dépôt est de 45s pour une couche de 40 nm, à 60s (pour une couche de 50 nm.

Cette couche est dopée à l'aide de 3 ou 4 couches ultrafines de tungstène métallique déposées par pulvérisation cathodique magnétron en mode courant continu DC pulsé (50 kHz, 2 µs), avec une puissance de 100W appliquée à une cible de tungstène de 150 mm de diamètre.

Les couches de tungstène sont intercalées dans la couche de VO₂, en réalisant, lors du dépôt de la couche de VO₂, toutes les 15 s, un balayage devant la cible de tungstène avec une vitesse de rotation du substrat de 15 tr/min sous 20 sccm d'argon.

Plus précisément, toutes les 15 s on arrête le dépôt de VO₂, et on fait passer l'échantillon très rapidement devant la cible de W pour déposer une couche ultrafine de W de quelques dixièmes de nanomètre.

L'ensemble de l'empilement obtenu à l'issue de cette étape d'élaboration de la couche thermochrome active dans l'infrarouge est ensuite recuit à 500°C sous la même pression partielle d'argon/oxygène que celle utilisée pour le dépôt de VO₂, soit à environ 2,9 10⁻² mbar pendant 1h.

L'empilement soumis au recuit comprend donc, successivement, depuis le substrat, le fond réflecteur en argent, les couches d'interfaces permettant d'assurer l'adhérence de la couche diélectrique sur le fond réflecteur, la couche diélectrique principale, les couches d'interface entre la couche diélectrique principale et la couche thermochrome, et enfin la couche thermochrome active dans l'infrarouge.

Il est à noter que la protection solaire n'est pas recuite. Elle est déposée après recuit, car sinon le CeO₂ qu'elle contient réagirait avec VO₂.

Le comportement thermochrome dans l'infrarouge, d'un dispositif préparé comme décrit ci-dessus, comportant une couche d'une épaisseur de 40 nm de matériau actif thermochrome, et dont la surface est de 2,5x2,5 cm², est présenté sur la Figure 3.

Plus exactement, la Figure 3 représente la variation de l'émissivité produite par un dispositif d'épaisseur active 40 nm et de surface 2,5x2,5 cm², intégrée de 2,5 à 25 µm, en fonction de la température, par rapport à l'émissivité d'un corps noir porté à la même température.

L'hystérésis de chauffe/refroidissement entre l'état de plus faible émissivité et l'état de plus haute émissivité est quasi-nulle (Δε = 0,3 avec ε _{BT} = 0,45 et ε _{HT} = 0,75) (ε _{BT} et ε _{HT} représentent la plus faible émissivité et la plus haute émissivité), et la température de commutation est de 15°C sur une plage de 2,5 à 25°C.

### 6. Elaboration de la protection solaire ou miroir de Bragg.

La même technique de dépôt par pulvérisation cathodique magnétron que celle utilisée dans les étapes 1 à 5 décrites plus haut est également utilisée pour réaliser une protection solaire, autrement dit un miroir de Bragg ou miroir solaire, réflecteur sur verre à 78%, sur l'empilement obtenu à l'issue des étapes 1 à 5 décrites plus haut.

Plus exactement, cette protection solaire, miroir de Bragg, ou miroir solaire est déposée sur la couche de matériau thermochrome qui est, depuis le substrat, la dernière couche de l'empilement obtenu à l'issue des étapes 1 à 5 décrites plus haut.

Cette protection solaire, miroir de Bragg, ou miroir solaire est composée d'une alternance de couches de CeO₂ (n = 2,5) et de SiO₂ (n = 1,48) à haut et bas indice de réfraction mesurés à 550 et 825 nm, et de valeurs moyennes respectivement égales à 2,2 et 1,5 sur la plage de 0,28 à 2,5 µm.

Un premier jeu de 3 paires de couches CeO₂ (épaisseur 55 nm) / SiO₂ (épaisseur 95 nm), centré dans le domaine du visible, sur 550 nm, est tout d'abord déposé sur la couche thermochrome active dans l'infrarouge.

Sur ce premier jeu de 3 paires de couches, on dépose ensuite un deuxième jeu de 3 paires de couches CeO₂ (épaisseur 80 nm) / SiO₂ (épaisseur 150 nm) centré dans le domaine du proche-infrarouge sur 825 nm.

Puis, sur ce deuxième jeu de trois paires de couches, on dépose une couche terminale de CeO₂ d'une épaisseur de 80 nm.

Les mêmes conditions de dépôt sont utilisées pour les dépôts de CeO₂ et SiO₂ du miroir solaire, pour la couche diélectrique de CeO₂ et pour les couches d'interface de silice respectivement.

Les durées de dépôts ont été adaptées en fonction des vitesses de dépôt de chaque matériau, soit :
Pour le premier jeu de trois paires de couches, centré à 550 nm , la vitesse de dépôt du CeO₂ est de 3,3 nm/min, et la durée de dépôt du CeO₂ est de 17 minutes, et la vitesse de dépôt du SiO₂ est de 10 nm/min, et la durée de dépôt du SiO₂ est de 9,5 minutes.

Pour le deuxième jeu de trois paires de couches, centré à 825 nm : la vitesse de dépôt du CeO₂ est de 3,3 nm/min, et la durée de dépôt du CeO₂ est de 24 minutes, et la vitesse de dépôt du SiO₂ est de 10 nm/min, et la durée de dépôt du SiO₂ est de 15 minutes.

Enfin, la couche terminale de CeO₂ est déposée en 24 min.

Les Figures 4A et 4B présentent les indices optiques (indice de réfraction n et indice d'absorption k) dans l'infrarouge des constituants du miroir solaire à savoir de l'oxyde CeO₂ (Figure 4A) et de l'oxyde SiO₂ (Figure 4B), obtenus à partir des spectres de réflexion et de transmission de couches modèles de CeO₂ et de SiO₂ d'une épaisseur de 200 nm déposées sur du silicium.

Il apparaît, au regard des Figures 4A et 4B, que le choix de la couche de CeO₂ est motivé par sa haute transparence dans l'infrarouge (k = 0), afin d'altérer le moins possible la variation d'émissivité du dispositif une fois revêtu de la protection solaire. De plus, cette couche offre une bonne protection vis-à-vis du matériau actif.

La couche de SiO₂ présente quant à elle une bande phonons centrée sur 9 µm, responsable d'une absorption moyenne supplémentaire décalant les valeurs basses d'émissivité vers le haut.

Le comportement thermochrome dans l'infrarouge, d'un dispositif préparé comme décrit ci-dessus (étapes 1 à 5), comportant une couche d'une épaisseur de 50 nm de matériau actif thermochrome dopé à 1%, et dont la surface est de 2,5x2,5 cm², est présenté sur la Figure 5. Ce dispositif n'est pas recouvert d'une protection solaire.

Plus exactement, la Figure 5 représente la variation de l'émissivité produite par un dispositif d'épaisseur active 50 nm et de surface 5x5 cm², intégrée de 2,5 à 25 µm, en fonction de la température, par rapport à l'émissivité d'un corps noir porté à la même température. Ce dispositif n'est pas recouvert d'une protection solaire.

Le comportement thermochrome dans l'infrarouge, d'un dispositif préparé comme décrit ci-dessus (étapes 1 à 5), comportant une couche d'une épaisseur de 50 nm de matériau actif thermochrome dopé à 1%, et dont la surface est de 2,5x2,5 cm², est présenté sur la Figure 6. Ce dispositif est recouvert d'une protection solaire préparée comme dans l'étape 6.

Plus exactement, la Figure 6 représente la variation de l'émissivité produite par un dispositif d'épaisseur active 50 nm et de surface 5x5 cm², intégrée de 2,5 à 25 µm, en fonction de la température, par rapport à l'émissivité d'un corps noir porté à la même température. Ce dispositif est recouvert d'une protection solaire.

Les Figures 5 et 6 montrent que, pour un dispositif comportant 50 nm de matériau actif dopé à 1%, le contraste optique infrarouge Δε passe de 0,4 (ε_{BT} = 0,35 et ε_{HT} = 0,75) à 0,3 après apposition de la protection solaire (ε_{BT} = 0,55 et ε_{HT} = 0,85) sur une plage de 20 à 50°C, avec une température de commutation autour de 35°C. On peut noter une augmentation de la valeur haute de l'émissivité favorable à la dissipation de la chaleur.

On peut apprécier sur les Figures 7 et 8, l'effet bénéfique d'une protection solaire constituée par un miroir de Bragg à double centrage (λ₀ (1) = 550 nm et λ₀ (2)= 825 nm) sur la réduction, diminution de l'absorptivité solaire à 22°C de deux dispositifs thermochromes selon l'invention.

Le premier dispositif comprend une couche d'une épaisseur de 40 nm de matériau actif dopé à 2% à l'état de forte émissivité infrarouge (VO₂ dopé au tungstène), dont α passe de 0,49 à 0,34 (Fig. 7).

Le deuxième dispositif dopé à 2% comprend une couche d'une épaisseur de 50 nm de matériau actif à l'état de faible émissivité infrarouge (VO₂ dopé au tungstène), dont α passe de 0,59 à 0,38 (Fig. 8).

## Revendications

1. Dispositif thermochrome tout-solide comprenant un empilement, ledit empilement comprenant, de préférence étant constitué par, successivement, depuis une face arrière jusqu'à une face avant exposée au rayonnement solaire :
a) un substrat solide (4) en un matériau inorganique résistant jusqu'à une température de 550°C ; de préférence, le substrat solide est en un matériau choisi parmi l'aluminium, le silicium, et les verres borosilicates ;
b) une couche réflectrice (5) dans l'Infrarouge en un matériau conducteur électronique;
c) des couches d'interface (6) isolantes électroniques ;
d) une couche diélectrique (9) inorganique isolante électronique et transparente au rayonnement infrarouge, en oxyde de cérium CeO₂, d'une épaisseur de 400 à 900 nm, de préférence de 700 à 900 nm;
e) des couches d'interface (10) isolantes électroniques;
f) une couche (13) d'un matériau thermochrome, actif dans l'infrarouge, qui est un oxyde de vanadium VO₂ dopé de type n, et cristallisé dans une phase monoclinique ou rutile, d'une épaisseur de 30 à 50 nm, de préférence de 30 à 40 nm;
g) un revêtement (15) de protection solaire, réflecteur solaire, transparent au rayonnement infrarouge.

2. Dispositif selon l'une quelconque des revendications précédentes, dans lequel le substrat solide se présente sous la forme d'une couche, de préférence d'une couche d'une épaisseur de 0,3 à 1 mm, par exemple d'une épaisseur de 0,5 mm.

3. Dispositif selon l'une quelconque des revendications précédentes, dans lequel le matériau conducteur électronique de la couche réflectrice dans l'Infrarouge b) est choisi parmi les métaux tels que les métaux nobles comme l'or, l'argent ou le platine ; l'aluminium, et le chrome ; les alliages métalliques ; et les oxydes métalliques conducteurs électroniques transparents dans le domaine du visible tels que l'oxyde d'indium dopé à l'étain ou ITO, l'oxyde d'étain dopé au fluor ou FTO, l'oxyde d'étain dopé à l'antimoine ou ATO, ou l'oxyde de zinc dopé à l'aluminium AZO ; de préférence la couche réflectrice est en argent.

4. Dispositif selon l'une quelconque des revendications précédentes, dans lequel la couche réflectrice b) a une épaisseur de 80 à 150 nm, de préférence de 100 nm ; et/ou les couches d'interface c) ont une épaisseur totale de 10 à 30 nm ; et/ou les couches d'interface e) ont une épaisseur totale de 105 à 155 nm.

5. Dispositif selon l'une quelconque des revendications précédentes, dans lequel les couches d'interface c) et/ou les couches d'interface e) sont au nombre de 2.

6. Dispositif selon l'une quelconque des revendications précédentes, dans lequel les couches d'interface c) comprennent, depuis la couche réflectrice, une première couche constituée de Si₃N₄ ou de AlN, puis une seconde couche constituée de SiO₂ ou de Al₂O_{3;} de préférence, la première couche constituée de Si₃N₄ ou de AlN a une épaisseur de 5 à 15 nm, par exemple de 10 nm, et la seconde couche constituée de SiO₂ ou de Al₂O₃ a une épaisseur de 5 à 15 nm, par exemple de 10 nm.

7. Dispositif selon l'une quelconque des revendications précédentes, dans lequel les couches d'interface e) comprennent, depuis la couche réflectrice, une première couche constituée de SiO₂, puis une seconde couche constituée de Si₃N₄; de préférence, la première couche, constituée de SiO₂ a une épaisseur de 5 à 15 nm, par exemple de 10 nm, et la seconde couche constituée de Si₃N₄ a une épaisseur de 100 à 140 nm, par exemple de 120 nm.

8. Dispositif selon l'une quelconque des revendications précédentes, dans lequel l'oxyde de vanadium IV, VO₂, est dopé de type n par des lacunes d'oxygène et/ou par substitution des cations V⁴⁺ à l'aide de cations métalliques Zⁿ⁺ de valence n supérieure à 4.

9. Dispositif selon la revendication 8, dans lequel l'oxyde de vanadium IV, VO₂, est dopé de type n uniquement par des lacunes d'oxygène, et répond à la formule VO₂₋ₓ, où x vaut de 0 exclus à 0,25 inclus, de préférence de 0,1 à 0,25.

10. Dispositif selon la revendication 8, dans lequel l'oxyde de vanadium IV, VO₂, est dopé de type n uniquement par substitution des cations V⁴⁺ à l'aide de cations métalliques Zⁿ⁺ de valence n supérieure à 4, et répond à la formule V_{1-y}Z_{y}O₂, où y vaut de 0,01 à 0,03, par exemple 0,02.

11. Dispositif selon l'une quelconque des revendications 8 et 10, dans lequel n est égal à 5 ou 6, et Z est choisi parmi Nb, Ta, Mo, ou W, de préférence Z est W.

12. Dispositif selon la revendication 8, dans lequel l'oxyde de vanadium IV, VO₂, est dopé de type n à la fois par des lacunes d'oxygène et par substitution des cations V⁴⁺ à l'aide de cations métalliques Zⁿ⁺ de valence n supérieure à 4, et répond à la formule V_{1-y}Z_{y}O₂₋ₓ.

13. Dispositif selon l'une quelconque des revendications précédentes, dans lequel le revêtement de protection solaire, réflecteur solaire, transparent dans l'infrarouge g), est constitué par un miroir de Bragg ; de préférence le miroir de Bragg est constitué par une alternance d'une couche d'un oxyde métallique de haut indice de réfraction (n de 2 à 2,5, par exemple 2,2) et d'une couche d'un oxyde métallique de faible indice de réfraction (n de 1,3 à 1,8, par exemple 1,5).

14. Procédé de préparation du dispositif selon l'une quelconque des revendications 1 à 13, dans lequel on réalise les étapes successives suivantes :
a) on dépose une couche réflectrice dans l'infrarouge en un matériau conducteur électronique sur un substrat solide en un matériau inorganique résistant jusqu'à une température de 550°C ;
b) on dépose des couches d'interface isolantes électroniques sur la couche réflectrice dans l'Infrarouge, déposée lors de l'étape a) ;
c) on dépose une couche diélectrique inorganique isolante électronique et transparente au rayonnement infrarouge, en oxyde de cérium CeO₂, d'une épaisseur de 400 à 900 nm, de préférence de 700 à 900 nm sur les couches d'interface déposées lors de l'étape b);
d) on dépose des couches d'interface isolantes électroniques sur la couche diélectrique isolante électronique et transparente au rayonnement infrarouge, en oxyde de cérium CeO₂, déposée lors de l'étape c) ;
e) on dépose une couche d'un matériau thermochrome, actif dans l'infrarouge, qui est un oxyde de vanadium VO₂ non dopé, ou un oxyde de vanadium dopé par des lacunes d'oxygène VO₂₋ₓ, dans une phase monoclinique, sur les couches d'interface déposées lors de l'étape d), et on intercale des couches ultrafines, à savoir d'une épaisseur de 0,1 à 0,5 nm de métal Z, par exemple de tungstène métallique dans la couche d'oxyde de vanadium VO₂ non dopé, ou on intercale éventuellement des couches ultrafines, à savoir d'une épaisseur de 0,1 à 0,5 nm de métal Z, par exemple de tungstène métallique dans la couche d'oxyde de vanadium dopé par des lacunes d'oxygène VO₂₋ₓ ;
f) on recuit le substrat, et les couches déposées lors des étapes a) à e) à une température de plus de 450°C à moins de 550°C, de préférence de 460°C à 540°C, de préférence encore de 500°C de manière à cristalliser le matériau thermochrome ; de préférence, le recuit du substrat, et des couches déposées lors des étapes a) à e) est réalisé sous une atmosphère d'argon et d'oxygène contenant au moins 96% en volume d'Argon ;
g) on dépose un revêtement de protection solaire, réflecteur solaire, transparent dans l'infrarouge, sur la couche d'un matériau thermochrome.

15. Procédé selon la revendication 14, dans lequel les couches et le revêtement de protection solaire sont déposés par un procédé de dépôt Physique en phase vapeur ou PVD choisi parmi la pulvérisation cathodique magnétron, l'ablation laser et l'évaporation ; de préférence, toutes les couches et le revêtement de protection solaire, sont déposés sous vide par un même procédé de dépôt physique en phase vapeur, de préférence par pulvérisation cathodique magnétron, par exemple par pulvérisation cathodique magnétron réactive.

16. Procédé selon la revendication 15, dans lequel toutes les étapes, y compris les étapes f) et g), sont réalisées dans une même enceinte sous vide, en continu, sans ouverture de l'enceinte entre chacune des étapes.

17. Utilisation du dispositif selon l'une quelconque des revendications 1 à 13, pour la protection thermique d'un objet, en particulier d'un satellite, d'un bâtiment ou d'un habitacle d'un véhicule tel qu'une automobile, un aéronef, un train, ou un navire.

## Patentansprüche

1. Thermochrome Festkörpervorrichtung mit einem Stapel, wobei der Stapel nacheinander von einer Rückseite zu einer der Sonnenstrahlung ausgesetzten Vorderseite hin enthält, vorzugsweise besteht aus :
a) ein festes Substrat (4) aus einem anorganischen Material, das bis zu einer Temperatur von 550°C beständig ist; wobei das feste Substrat vorzugsweise aus einem Material besteht, das aus Aluminium, Silizium und Borosilikatglas ausgewählt ist;
- eine Infrarot-reflektierende Schicht (5) aus einem elektronenleitenden Material;
c) elektronenisolierende Grenzschichten (6);
d) eine elektronenisolierende, für Infrarotstrahlen durchlässige, anorganische dielektrische Schicht (9) aus Ceroxid CeO₂ mit einer Dicke von 400 bis 900 nm, vorzugsweise 700 bis 900 nm,
e) elektronenisolierende Grenzschichten (10);
f) eine Schicht (13) aus einem thermochromen, im Infrarotbereich aktiven Material, das ein n-dotiertes Vanadiumoxid VO₂ ist und in einer monoklinen Phase oder Rutil-Phase kristallisiert ist, mit einer Dicke von 30 bis 50 nm, vorzugsweise 30 bis 40 nm;
g) eine sonnenlichtreflektierende Sonnenschutz-Beschichtung (15), die für Infrarotstrahlung durchlässig ist.

2. Vorrichtung nach dem vorangehenden Anspruch,
wobei das feste Substrat in Form einer Schicht vorliegt, vorzugsweise in Form einer Schicht mit einer Dicke von 0,3 bis 1 mm, beispielsweise mit einer Dicke von 0,5 mm.

3. Vorrichtung nach einem der vorangehenden Ansprüche,
wobei das elektronenleitende Material der Infrarot-reflektierenden Schicht b) ausgewählt ist aus Metallen wie Edelmetallen, wie Gold, Silber oder Platin; Aluminium und Chrom; Metalllegierungen; und elektronenleitenden Metalloxiden, die im sichtbaren Bereich durchlässig sind, wie zinndotiertes Indiumoxid bzw. ITO, fluordotiertes Zinnoxid bzw. FTO, antimondotiertes Zinnoxid bzw. ATO, oder aluminiumdotiertes Zinkoxid AZO; wobei die reflektierende Schicht vorzugsweise aus Silber besteht.

4. Vorrichtung nach einem der vorangehenden Ansprüche,
wobei die reflektierende Schicht b) eine Dicke von 80 bis 150 nm, vorzugsweise von 100 nm aufweist; und/oder
wobei die Grenzschichten c) eine Gesamtdicke von 10 bis 30 nm aufweisen; und/oder
wobei die Grenzschichten e) eine Gesamtdicke von 105 bis 155 nm aufweisen.

5. Vorrichtung nach einem der vorangehenden Ansprüche,
wobei die Grenzschichten c) und/oder die Grenzschichten e) in einer Anzahl von 2 vorliegen.

6. Vorrichtung nach einem der vorangehenden Ansprüche,
wobei die Grenzschichten c) von der reflektierenden Schicht ausgehend eine erste Schicht aus Si₃N₄ oder AlN, dann eine zweite Schicht aus SiO₂ oder Al₂O₃ enthalten; wobei vorzugsweise die erste Schicht aus Si₃N₄ oder AlN eine Dicke von 5 bis 15 nm, beispielweise 10 nm, aufweist und die zweite Schicht aus SiO₂ oder Al₂O₃ eine Dicke von 5 bis 15 nm, beispielsweise 10 nm, aufweist.

7. Vorrichtung nach einem der vorangehenden Ansprüche,
wobei die Grenzschichten e) von der reflektierenden Schicht ausgehend eine erste Schicht aus SiO₂, dann eine zweite Schicht aus Si₃N₄ aufweist; wobei vorzugsweise die erste Schicht aus SiO₂ eine Dicke von 5 bis 15 nm, beispielweise 10 nm, aufweist, und die zweite Schicht aus Si₃N₄ eine Dicke von 100 bis 140 nm, beispielsweise 120 nm, aufweist.

8. Vorrichtung nach einem der vorangehenden Ansprüche,
wobei das Vanadium-IV-Oxid VO₂ durch Sauerstofflücken und/oder durch Substitution der V⁴⁺-Kationen mittels Zⁿ⁺-Metallkationen mit einer Wertigkeit n größer als 4 n-dotiert ist.

9. Vorrichtung nach Anspruch 8,
wobei das Vanadium IV-Oxid VO₂ nur mit Sauerstofflücken n-dotiert ist und der Formel VO₂₋ₓ entspricht, wobei x 0 ausschließlich bis 0,25 einschließlich, vorzugsweise 0,1 bis 0,25, beträgt.

10. Vorrichtung nach Anspruch 8,
wobei das Vanadium IV-Oxid VO₂ nur durch Substitution der V⁴⁺-Kationen mittels Zⁿ⁺-Metallkationen mit einer Wertigkeit n größer als 4 n-dotiert ist und der Formel V_{1-y}Z_{y}O₂ entspricht, wobei y 0,01 bis 0,03, beispielsweise 0,02, beträgt.

11. Vorrichtung nach einem der Ansprüche 8 bis 10,
wobei n gleich 5 oder 6 ist, Z ausgewählt ist aus Nb, Ta, Mo oder W, wobei Z vorzugsweise W ist.

12. Vorrichtung nach Anspruch 8,
wobei das Vanadium IV-Oxid VO₂ sowohl durch Sauerstofflücken als auch durch Substitution der V⁴⁺-Kationen mittels Zⁿ⁺-Metallkationen mit einer Wertigkeit n größer als 4 n-dotiert ist und der Formel V_{1-y}Z_{y}O₂₋ₓ entspricht.

13. Vorrichtung nach einem der vorangehenden Ansprüche,
die für Infrarotstrahlen durchlässige, sonnenlichtreflektierende Sonnenschutz-Beschichtung g) aus einem Bragg-Spiegel besteht; wobei vorzugsweise der Bragg-Spiegel aus einer Wechselfolge einer Schicht aus einem Metalloxid mit hohem Brechungsindex (n 2 bis 2,5, beispielsweise 2,2) und einer Schicht aus einem Metalloxid mit niedrigem Brechungsindex (n 1,3 bis 1,8, beispielsweise 1,5) besteht.

14. Verfahren zum Herstellen der Vorrichtung nach einem der Ansprüche 1 bis 13, wobei die nachstehenden aufeinanderfolgenden Schritte ausgeführt werden:
a) Abscheiden einer Infrarot-reflektierenden Schicht aus einem elektronenleitenden Material auf einem festen Substrat aus einem anorganischen Material, das bis zu einer Temperatur von 550°C beständig ist;
b) Abscheiden von elektronenisolierenden Grenzschichten auf der Infrarot-reflektierenden Schicht, die in Schritt a) abgeschieden wurde;
c) Abscheiden einer elektronenisolierenden, für Infrarotstrahlen durchlässigen, anorganischen dielektrischen Schicht aus Ceroxid CeO₂ mit einer Dicke von 400 bis 900 nm, vorzugsweise 700 bis 900 nm, auf den in Schritt b) abgeschiedenen Grenzschichten;
d) Abscheiden von elektronenisolierenden Grenzschichten auf der elektronenisolierenden, für Infrarotstrahlen durchlässigen dielektrischen Schicht aus Ceroxid CeO₂, die in Schritt c) abgeschieden wurde;
e) Abscheiden einer Schicht aus einem thermochromen, im Infrarotbereich aktiven Material, das ein nicht dotiertes Vanadiumoxid VO₂ oder ein durch Sauerstofflücken dotiertes Vanadiumoxid VO₂₋ₓ in einer monoklinen Phase ist, auf den in Schritt d) abgeschiedenen Grenzschichten, und Einbringen von ultradünnen Schichten, nämlich mit einer Dicke von 0,1 bis 0,5 nm, aus Metall Z, beispielsweise aus metallischem Wolfram, in die Schicht aus undotierten Vanadiumoxid VO₂, oder gegebenenfalls Einbringen von ultradünnen Schichten, nämlich mit einer Dicke von 0,1 bis 0,5 nm, aus Metall Z, beispielsweise aus metallischem Wolfram, in die Schicht aus durch Sauerstofflücken dotiertem Vanadiumoxid VO₂₋ₓ;
f) Tempern des Substrats und der in den Schritten a) bis e) abgeschiedenen Schichten bei einer Temperatur von mehr als 450°C bis weniger als 550°C, vorzugsweise 460°C bis 540°C, noch bevorzugter 500°C, um das thermochrome Material zu kristallisieren; wobei vorzugsweise das Tempern des Substrats und der in den Schritten a) bis e) abgeschiedenen Schichten in einer Atmosphäre aus Argon und Sauerstoff, die mindestens 96 Vol.-% Argon enthält, durchgeführt wird;
g) Abscheiden einer sonnenlichtreflektierenden, für Infrarotstrahlen durchlässigen Sonnenschutz-Beschichtung auf der Schicht aus thermochromem Material.

15. Verfahren nach Anspruch 14,
wobei die Schichten und die Sonnenschutzbeschichtung durch ein physikalisches Dampfphasenabscheidungs- oder PVD-Verfahren, ausgewählt aus Magnetron-Sputtern, Laserablation und Verdampfung, abgeschieden werden; wobei vorzugsweise alle Schichten und die Sonnenschutzbeschichtung unter Vakuum durch das gleiche physikalische Dampfphasenabscheidungsverfahren, vorzugsweise durch Magnetron-Sputtern, beispielsweise reaktives Magnetron-Sputtern, abgeschieden werden.

16. Verfahren nach Anspruch 15,
wobei alle Schritte, einschließlich der Schritte f) und g), kontinuierlich in derselben Vakuumkammer ohne Öffnen der Kammer zwischen den einzelnen Schritten durchgeführt werden.

17. Verwendung der Vorrichtung nach einem der Ansprüche 1 bis 13 zum thermischen Schutz eines Objektes, insbesondere eines Satelliten, eines Gebäudes oder eines Fahrgastraums von einem Fahrzeug, wie beispielsweise von einem Kraftfahrzeug, einem Luftfahrzeug, einem Zug oder einem Schiff.

## Claims

1. Solid-state thermochromic device comprising a stack, wherein said stack comprises, preferably consists of, successively, from a rear face to a front face exposed to solar radiation:
a) a solid substrate (4) made of an inorganic material resistant up to a temperature of 550°C; preferably, the solid substrate is made of a material selected from among aluminum, silicon, and borosilicate glasses;
b) an infrared-reflective layer (5) made of an electronically-conductive material;
c) electronically insulating interface layers (6);
d) an electronically insulating inorganic dielectric layer (9) transparent to infrared radiation, made of cerium oxide CeO₂, and has a thickness of 400 to 900 nm, preferably 700 to 900 nm;
e) electronically insulating interface layers (10);
f) a layer (13) of an infrared-active thermochromic material which is an n-doped VO₂ vanadium oxide, and crystallized in a monoclinic or rutile phase, having a thickness of 30 to 50 nm, preferably of 30 to 40 nm;
g) a solar protective coating (15), solar reflective coating, transparent to infrared radiation.

2. Device according to any one of the preceding claims, wherein the solid substrate is in the form of a layer, preferably of a layer having a thickness of 0.3 to 1 mm, for example a thickness of 0.5 mm.

3. Device according to any one of the preceding claims, wherein the electronically-conductive material of infrared-reflective layer b) is selected from metals such as noble metals like gold, silver or platinum; aluminum, and chromium; metal alloys; and electronically-conductive metal oxides transparent in the visible range such as tin-doped indium oxide (ITO), fluorine-doped tin oxide (FTO), antimony-doped tin oxide (ATO), or aluminum-doped zinc oxide (AZO); preferably the reflective layer is made of silver.

4. Device according to any one of the preceding claims, wherein the reflective layer b) has a thickness of 80 to 150 nm, preferably 100 nm; and/or the interface layers c) have a total thickness of 10 to 30 nm; and/or the interface layers e) have a total thickness of 105 to 155 nm.

5. Device according to any one of the preceding claims, wherein the interface layers c) and/or the interface layers e) are 2 in number.

6. Device according to any one of the preceding claims, wherein the interface layers c) comprise, starting from the reflective layer, a first layer consisting of Si₃N₄ or of AlN, then a second layer consisting of SiO₂ or Al₂O₃; preferably, the first layer consisting of Si₃N₄ or AlN has a thickness of 5 to 15 nm, for example 10 nm, and the second layer consisting of SiO₂ or Al₂O₃ has a thickness of 5 to 15 nm, for example 10 nm.

7. Device according to any one of the preceding claims, wherein the interface layers e) comprise, starting from the reflective layer, a first layer consisting of SiO₂, then a second layer consisting of Si₃N₄; preferably, the first layer, consisting of SiO₂ has a thickness of 5 to 15 nm, for example 10 nm, and the second layer consisting of Si₃N₄, has a thickness of 100 to 140 nm, for example 120 nm.

8. Device according to any one of the preceding claims, wherein the vanadium IV oxide, VO₂, is n-doped with oxygen vacancies and/or by substitution of the V⁴⁺ cations using Zⁿ⁺ metal cations, having a valency n greater than 4.

9. Device according to claim 8, wherein the vanadium IV oxide, VO₂, is n-doped only by oxygen vacancies, and corresponds to the formula VO₂₋ₓ, where x is from 0 exclusive to 0.25 inclusive, preferably from 0.1 to 0.25.

10. Device according to claim 8, wherein the vanadium IV oxide, VO₂, is n-doped only by substitution of the V⁴⁺ cations using Zⁿ⁺ metal cations, having a valency n greater than 4, and corresponds to the formula V_{1-y}Z_{y}O₂, where y ranges from 0.01 to 0.03, for example 0.02.

11. Device according to any one of claims 8 and 10, wherein n is equal to 5 or 6, and Z is selected from among Nb, Ta, Mo, or W, preferably Z is W.

12. Device according to claim 8, wherein the vanadium IV oxide, VO₂, is n-doped at the same time by oxygen vacancies and by substitution of the V⁴⁺ cations using Zⁿ⁺ metal cations, having a valency n greater than 4, and corresponds to the formula V_{1-y}Z_{y}O₂₋ₓ.

13. Device according to any one of the preceding claims, wherein the solar protective coating, solar reflective coating, transparent to infrared g), consists of a Bragg mirror; preferably, the Bragg mirror consists of an alternation of a layer of a metal oxide of high refractive index (n of 2 to 2.5, for example 2.2) and of a layer of a metal oxide of low refractive index (n of 1.3 to 1.8, for example 1.5).

14. Method for producing the device according to any one of the claims 1 to 13, wherein the following successive steps are carried out:
a) deposition of an infrared-reflective layer made of an electronically-conductive material on a solid substrate made of an inorganic material resistant up to a temperature of 550°C;
b) deposition of electronically insulating interface layers on the infrared-reflective layer deposited during step a);
c) deposition of an electronically insulating inorganic dielectric layer transparent to infrared radiation, made of cerium oxide CeO₂, having a thickness of 400 to 900 nm, preferably of 700 to 900 nm, on the interface layers deposited during step b);
d) deposition of electronically insulating interface layers on the electronically insulating dielectric layer, and transparent to infrared radiation, made of cerium oxide CeO₂, and deposited during step c);
e) deposition of a layer of an infrared-active thermochromic material, which is an undoped vanadium oxide VO₂, or a vanadium oxide doped with oxygen vacancies VO₂₋ₓ, in a monoclinic phase, on the interface layers deposited during step d), and ultrafine layers, i.e. with a thickness of 0.1 to 0.5 nm of a metal Z, for example a tungsten metal, are intercalated in the layer of undoped vanadium oxide VO₂, or optionally ultrafine layers, i.e. with a thickness of 0.1 to 0.5 nm of a metal Z, for example tungsten metal, are intercalated in the layer of vanadium oxide VO₂₋ₓ doped with oxygen vacancies;
f) annealing of the substrate, and of the layers deposited during steps a) to e) at a temperature of more than 450°C to less than 550°C, preferably of 460°C to 540°C, more preferably 500°C, in order to crystallize the thermochromic material; preferably, the annealing of the substrate, and of the layers deposited during steps a) to e) is carried out under an argon and oxygen atmosphere containing at least 96% by volume of argon.
g) deposition of a solar protective coating, solar reflective coating, transparent in the infrared, on the layer of a thermochromic material.

15. Method according to claim 14, wherein the layers and the solar protective coating are deposited by a physical vapor deposition method (PVD) selected from among magnetron cathode sputtering, laser ablation and evaporation; preferably, all the layers and the solar protective coating, are deposited under vacuum by a same physical vapor deposition method, preferably by magnetron cathode sputtering, for example by reactive magnetron cathode sputtering.

16. Method according to claim 15, wherein all the steps, including steps f) and g), are carried out, in the same vacuum chamber, continuously, without opening the chamber between each of the steps.

17. Use of the device according to any one of the claims 1 to 13 for the thermal protection of an object, in particular a satellite, a building or a passenger compartment of a vehicle such as an automobile, an aircraft, a train, or a vessel.
